# EUROPEAN PATENT APPLICATION

(11) **EP 3 028 926 A1**
(43) Date of publication of application: **08.06.2016**
(21) Application number: 14831912.2
(22) Date of filing: 31.07.2014
(51) Int. Cl.: B62D 1/19, B62D 1/184

(54) **STEERING DEVICE**

(30) Priority: 31.07.2013 JP 2013159589; 28.08.2013 JP 2013177407
(71) Applicant: JTEKT Corporation, Osaka-shi, Osaka 542-8502 (JP); Fuji Kiko Co., Ltd., Shizuoka 431-0431 (JP)
(72) Inventor: OKANO, Ryota, Osaka-shi Osaka 542-8502 (JP); NAGAOKA, Masayuki, Osaka-shi Osaka 542-8502 (JP); IMAGAKI, Susumu, Osaka-shi Osaka 542-8502 (JP); YAMAOKA, Michiaki, Osaka-shi Osaka 542-8502 (JP); UESAKA, Yota, Kosai-shi Shizuoka 431-0431 (JP)
(74) Representative: Winter, Brandl, Fürniss, Hübner, Röss, Kaiser, Polte - Partnerschaft mbB
(86) International application number: PCT/JP2014/070214
(87) International publication number: WO 2015/016312

(57) **Abstract**

Provided is a steering device including a hollow upper jacket that accommodates a steering shaft, a first engagement member, a rotary shaft that extends in a direction intersecting an axial direction of the steering shaft, and a second engagement member that is a component independent from the rotary shaft. The first engagement member has an engagement hole and is attached to the upper jacket. The second engagement member has an engagement projection which is engageable with the engagement hole. The second engagement member is movable between a lock position where the engagement projection engages with the engagement hole and a release position where the engagement projection is disengaged from the engagement hole, in accordance with a rotation of the rotary shaft. A vertical direction of the second engagement member between the lock position and the release position is different from a rotating direction of the rotary shaft.

## Description

### Technical Field

The invention relates to a steering device.

### Background Art

For example, in a steering column for an automobile disclosed in PTL 1, a steering shaft is rotatably supported by an adjustment unit which is supported by a support unit. When the adjustment unit is moved in an axial direction of the steering shaft, it is possible to adjust a position of a steering wheel (a steering member) attached to the steering shaft, in the axial direction.

The adjustment unit is disposed between a pair of side plates in the support unit. A hole is provided in each of the side plates, and a clamping bolt is inserted through the holes. A lock member is attached to the clamping bolt, and an operation lever is connected thereto. In addition, the adjustment unit retains a counter lock member in which a notch is formed. When the operation lever is operated so as to rotate the clamping bolt, a projection of the lock member is inserted into the notch, and thus, a position of the steering wheel in the axial direction is locked.

### Citation List

### Patent Literature

[PTL 1] JP 2011-516323 T

### Summary of Invention

### Technical Problem

In a case of the steering column of an automobile in PTL 1, when a shock from a vehicle collision with something (at the time of vehicle collision) is applied to the steering column of an automobile, there is a possibility that a clamping bolt abruptly rotates and a projection of a lock member is disengaged from a notch. When the projection of the lock member is disengaged from the notch, a locked steering wheel is abruptly released, and it is not preferable.

The invention has been made based on such a background and an object thereof is to provide a steering device in which a locked position of a steering member can be prevented from being abruptly released.

### Solution to Problem

According to an aspect of the present invention, there is provided a steering device (1) including:
a steering shaft (3) in which a steering member (2) is attached to one end (14A) thereof and which is extendable and retractable in an axial direction (X) thereof;
a column jacket (4) which includes a hollow lower jacket (17) and a hollow upper jacket (16) positioned closer to the steering member than the lower jacket and accommodates and rotatably supports the steering shaft, the column jacket being extendable and retractable together with the steering shaft due to a relative movement of the upper jacket in the axial direction with respect to the lower jacket;
a first engagement member (27) which is formed with a plurality of engagement holes (34) arranged in the axial direction and is attached to the upper jacket;
a bracket (21) which is supported by a vehicle body (12) in a state where a position thereof in the axial direction is fixed;
a rotary shaft (29) which extends in a direction intersecting the axial direction and to which an operation lever (28) is connected, the rotary shaft being supported by the bracket so as to be rotatable in accordance with an operation of the operation lever; and
a second engagement member (30) which includes an engagement projection (43) being engageable with any of the engagement holes and being elastically deformable and is a component independent from the rotary shaft, the second engagement member being supported by the bracket so as to be movable between a lock position where the engagement projection engages with the engagement hole and a release position where the engagement projection is disengaged from the engagement hole, in accordance with a rotation of the rotary shaft.

A movement direction (Z) of the second engagement member between the lock position and the release position is different from a rotating direction (S) of the rotary shaft.

A cam (31) which is attached to the rotary shaft, eccentrically rotates in accordance with a rotation of the rotary shaft, and moves the second engagement member between the lock position and the release position may be included.

The second engagement member may include:
a main body (41) in which the engagement projection is provided; and
a pressing member (42) which is provided as a component independent from the main body, is elongated in the axial direction, and presses the main body against the first engagement member when being pressed by the cam while being at the lock position.

The main body may be formed of a leaf spring, and the engagement projection may be a portion which is cut and raised from the main body toward the first engagement member side.

The steering device may include a biasing portion (44) which is provided in the main body and biases the second engagement member toward the release position.

The steering device may include a positioning portion (45) which is provided in the main body and positions the pressing member in the main body.

The steering device may include a shock absorption portion (33) which is provided in the first engagement member and is deformed while accompanying the upper jacket at the time of vehicle collision so as to absorb a shock at the time of vehicle collision.

The steering device may include a shock absorption portion (33) which is provided in the main body so as to be disposed between the main body and the pressing member and is deformed while accompanying the upper jacket or sliding with respect to the pressing member at the time of vehicle collision so as to absorb a shock at the time of vehicle collision.

According to another aspect of the present invention, there is provided a steering device including:
a steering shaft (3) in which a steering member (2) is attached to one end (14A) thereof and which is extendable and retractable in an axial direction (X) thereof;
a column jacket (4) which includes a hollow lower jacket (17) and a hollow upper jacket (16) positioned closer to the steering member than the lower jacket and accommodates and rotatably supports the steering shaft, the column jacket being extendable and retractable together with the steering shaft due to a relative movement of the upper jacket in the axial direction with respect to the lower jacket;
a bracket (21) which is supported by a vehicle body (12) in a state where a position thereof in the axial direction is fixed;
a rotary shaft (29) which extends a direction intersecting the axial direction and to which an operation lever (28) is connected, the rotary shaft being supported by the bracket so as to be rotatable in accordance with an operation of the operation lever;
a first engagement member (70) which is formed with a plurality of engagement holes (83) arranged in the axial direction;
a second engagement member (74) which includes an engagement projection (77) being engageable with any of the engagement holes and being elastically deformable and is a component individually independent from the rotary shaft and the first engagement member, the second engagement member being supported by the upper jacket so as to be relatively movable between a lock position where the engagement projection engages with the engagement hole and a release position where the engagement projection is disengaged from the engagement hole, with respect to the first engagement member in accordance with a rotation of the rotary shaft; and
a pressing member (42) which is disposed on a side opposite to the second engagement member with respect to the first engagement member, is supported on a side of the vehicle body, pinches the first engagement member between the pressing member and the second engagement member while being at the lock position, and releases the first engagement member pinched between the pressing member and the second engagement member while the second engagement member is at the release position.

A relative movement direction of the second engagement member between the lock position and the release position is different from a rotating direction of the rotary shaft, and
the first engagement member also serves as a shock absorption portion (33) which is deformed while accompanying the upper jacket or sliding with respect to the pressing member at the time of vehicle collision so as to absorb a shock at the time of vehicle collision.

The steering device may include a fixing-releasing portion (57) which fixes a portion (55) of the shock absorption portion in the axial direction in order to cause the shock absorption portion to be deformed at the time of vehicle collision, and releases the fixed portion of the shock absorption portion in the axial direction in order to cause the shock absorption portion to slide with respect to the pressing member at the time of vehicle collision.

The steering device may include a second shock absorption portion (62) which is disposed so as to overlap the shock absorption portion, has a portion (64) fixed in the axial direction, and is deformed while accompanying the upper jacket at the time of vehicle collision so as to absorb a shock at the time of vehicle collision.

In the above description, the numbers or the like in the parentheses denotes reference numerals and signs of corresponding configurational elements of the embodiment described below. However, it is not intended that the reference numerals and signs limit Claims.

### Advantageous Effects of invention

According to the present invention, in a steering device, due to the existence of a bracket, positions of a rotary shaft and a second engagement member (a position of a steering shaft in an axial direction) are individually fixed. Then, when the second engagement member is at a lock position and an engagement projection of the second engagement member engages with an engagement hole of a first engagement member, both a column jacket and the steering shaft cannot extend and retract, and thus, a position of a steering member in the axial direction is locked.

In such a steering device, a rotating direction of a rotary shaft is different from a movement direction of the second engagement member which moves between the lock position and a release position in accordance with a rotation of the rotary shaft. Therefore, even though a shock at the time of vehicle collision is applied to the steering device and tends to cause the second engagement member at the lock position to move to the release position, since the movement of the second engagement member needs to be converted into a rotary motion of the rotary shaft, the rotary shaft does not immediately rotate. As a result thereof, it is possible to maintain the second engagement member while remaining at the lock position. Furthermore, since the engagement projection can be elastically deformed so as not to be disengaged from the engagement hole at the time of vehicle collision, due to the elastic deformation thereof, it is also possible to maintain the second engagement member while remaining at the lock position.

Accordingly, in the steering device, it is possible to prevent the locked position of the steering member from being abruptly released.

In addition, when an operation lever is operated so as to move the second engagement member to the lock position, even though the engagement projection and the engagement hole of the first engagement member do not coincide with each other in the axial direction, the engagement projection can be elastically deformed by coming into contact with the first engagement member (a portion other than the engagement hole). Therefore, since an operation of the operation lever does not become stiff in the midst thereof, it is possible to operate the operation lever to the end. Then, when the engagement projection and the engagement hole coincide with each other for some reason at the time of vehicle collision or the like, since the engagement projection can engage with the engagement hole by being elastically deformed, it is possible to prevent the locked position of the steering member from being abruptly released thereafter.

According to the present invention, it is possible to move the second engagement member between the lock position and the release position in a simple configuration in which a cam attached to the rotary shaft eccentrically rotates.

According to the present invention, in the second engagement member while being at the lock position, since a pressing member elongated in the axial direction presses a main body provided with the engagement projection against the first engagement member, it is possible to maintain the second engagement member while remaining at the lock position. Accordingly, it is possible to further prevent the locked position of the steering member from being abruptly released.

According to the present invention, it is possible to realize the elastically deformable engagement projection having a simple configuration by cutting and raising the main body which is formed of a leaf spring.

According to the present invention, when it is intended that the engagement projection is disengaged from the engagement hole in order to perform a positional adjustment of the steering member, it is possible to reliably move the second engagement member to the release position by a biasing portion which is provided in the main body.

According to the present invention, it is possible to position the pressing member in the main body by a positioning portion which is provided in the main body.

According to the invention disclosed in Claim 7, a shock absorption portion provided in the first engagement member can absorb a shock at the time of vehicle collision by being deformed while accompanying an upper jacket at the time of vehicle collision. In other words, the main body can perform both a function of locking the position of the steering member and a function of absorbing a shock at the time of vehicle collision.

According to the present invention, the shock absorption portion which is provided in the main body so as to be disposed between the main body and the pressing member can absorb a shock at the time of vehicle collision by being deformed while accompanying the upper jacket or sliding with respect to the pressing member at the time of vehicle collision.

According to the present invention, in the steering device, when the second engagement member is at the lock position, the engagement projection of the second engagement member on the upper jacket side engages with the engagement hole of the first engagement member, and the first engagement member is pinched between the pressing member on a vehicle body side and the second engagement member. Accordingly, since both the column jacket and the steering shaft cannot extend and retract, and thus, a position of the steering member in the axial direction is locked.

In such a steering device, the rotating direction of the rotary shaft is different from a relative movement direction of the second engagement member which relatively moves between the lock position and the release position with respect to the first engagement member in accordance with a rotation of the rotary shaft. Therefore, even though a shock at the time of vehicle collision is applied to the steering device and tends to cause the second engagement member at the lock position to relatively move to the release position, since the movement of the second engagement member needs to be converted into a rotary motion of the rotary shaft, the rotary shaft does not immediately rotate. As a result thereof, it is possible to maintain the second engagement member while remaining at the lock position. Furthermore, since the engagement projection can be elastically deformed so as not to be disengaged from the engagement hole at the time of vehicle collision, due to the elastic deformation thereof, it is also possible to maintain the second engagement member while remaining at the lock position.

Accordingly, in the steering device, it is possible to prevent the locked position of the steering member from being abruptly released.

In addition, when an operation lever is operated so as to relatively move the second engagement member to the lock position, even though the engagement projection and the engagement hole of the first engagement member do not coincide with each other in the axial direction, the engagement projection can be elastically deformed by coming into contact with the first engagement member (a portion other than the engagement hole). Therefore, since an operation of the operation lever does not become stiff in the midst thereof, it is possible to operate the operation lever to the end. Then, when the engagement projection and the engagement hole coincide with each other for some reason at the time of vehicle collision or the like, since the engagement projection can engage with the engagement hole by being elastically deformed, it is possible to prevent the locked position of the steering member from being abruptly released thereafter.

In addition, as the first engagement member also serves as the shock absorption portion at the time of vehicle collision, it is possible to absorb a shock at the time of vehicle collision by being deformed while accompanying the upper jacket or sliding with respect to the pressing member.

According to the present invention, it is possible to appropriately absorb a shock by selecting deformation of the shock absorption portion or sliding of the shock absorption portion (with respect to the pressing member) by a fixing-releasing portion in accordance with magnitude of a shock at the time of vehicle collision.

According to the present invention, it is possible to appropriately absorb a shock by causing only a second shock absorption portion to be deformed or causing both the shock absorption portion and the second shock absorption portion to be deformed in accordance with magnitude of a shock at the time of vehicle collision.

### Brief Description of Drawings

Fig. 1 is a perspective view of a main portion of a steering device 1 according to an embodiment of the present invention.
Fig. 2 is a schematic diagram illustrating a schematic configuration of the steering device 1.
Fig. 3 is an exploded perspective view of the main portion of the steering device 1.
Fig. 4 is a perspective view of a first engagement member 27 which is viewed in a direction different from that in Fig. 3.
Fig. 5 is a perspective view of a second engagement member 30 which is viewed in a direction different from that in Fig. 3.
Fig. 6 is a schematic diagram illustrating the main portion of the steering device 1 in a lock state.
Fig. 7 is a schematic diagram illustrating the main portion of the steering device 1 in a release state.
Fig. 8 is a diagram of a first modification example of the present invention applied to that in Fig. 1.
Fig. 9 is a diagram of the first modification example applied to that in Fig. 3.
Fig. 10 is a diagram of the first modification example applied to that in Fig. 6.
Fig. 11 is a diagram of the first modification example applied to that in Fig. 7.
Fig. 12 illustrates a state of that in Fig. 6 after secondary collision.
Fig. 13 illustrates a state after secondary collision in a state where a fixing-releasing portion 57 has released a fixed portion of a shock absorption portion 33 in the first modification example.
Fig. 14 is a diagram of a second modification example of the present invention applied to that in Fig. 12.
Fig. 15 is a diagram of the second modification example applied to that in Fig. 13.
Fig. 16 is a diagram of a third modification example of the present invention applied to that in Fig. 3.

### Description of Embodiment

A preferable embodiment of the present invention will be described with reference to the accompanying drawings.

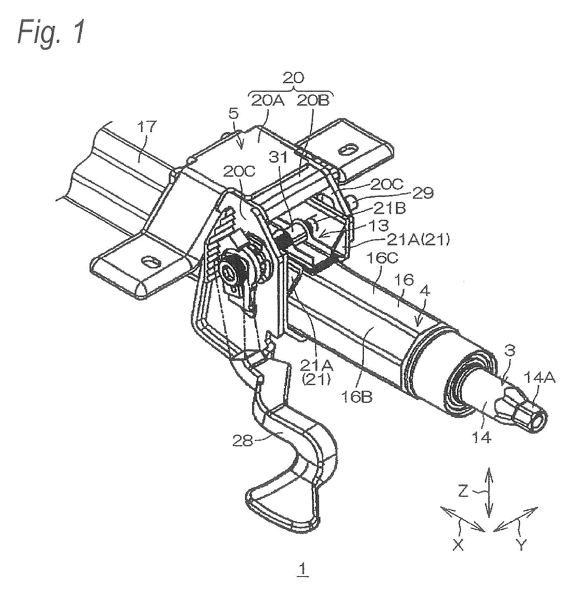

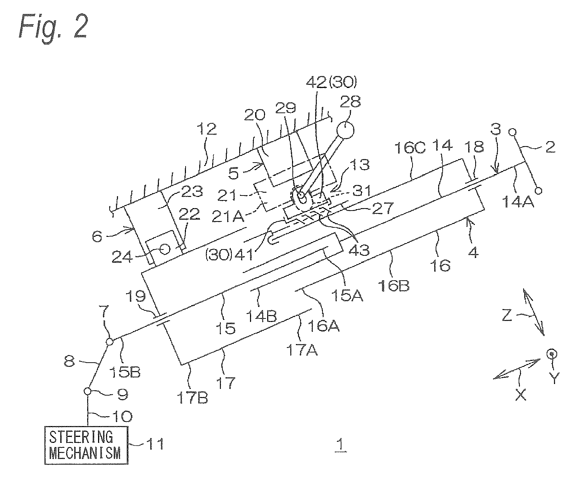

Fig. 1 is a perspective view of a main portion of a steering device 1 according to the embodiment of the present invention. Fig. 2 is a schematic diagram illustrating a schematic configuration of the steering device 1. Fig. 1 illustrates the steering device 1 in a realistic manner. Hereinafter, the steering device 1 will be described in its entirety mainly with reference to Fig. 2. In Fig. 2, the left side of the sheet indicates the front side of a vehicle body 12 to which the steering device 1 is attached, the right side of the sheet indicates the rear side of the vehicle body 12, the upper side of the sheet indicates the upper side of the vehicle body 12, and the lower side of the sheet indicates the lower side of the vehicle body 12.

With reference to Fig. 2, the steering device 1 mainly includes a steering member 2 such as a steering wheel, a steering shaft 3, a column jacket 4, an upper bracket 5, a lower bracket 6, a first universal joint 7, an intermediate shaft 8, a second universal joint 9, a pinion shaft 10, a steering mechanism 11, and a lock mechanism 13.

A function of the steering device 1 will be simply described. The steering shaft 3 rotates around the axis of the steering member 2 by steering torque transmitted from the steering member 2. The rotation is transmitted to the steering mechanism 11 via the first universal joint 7, the intermediate shaft 8, the second universal joint 9, and the pinion shaft 10. The steering mechanism 11 is configured to include a rack and pinion mechanism and the like. The steering mechanism 11 performs wheel turning of turning wheels such as tires (not illustrated) in response to a transmitted rotation of the steering shaft 3.

In addition, the steering device 1 is attached to the vehicle body 12 through the upper bracket 5 and the lower bracket 6.

The steering shaft 3 has a substantially cylindrical shape or a substantially columnar shape in its entirety. Hereinafter, a direction in which the steering shaft 3 extends (a direction tilting toward the rear upper side with respect to the horizontal direction) will be referred to as an axial direction X. In addition, directions orthogonal to the axial direction X will be referred to as a transverse direction Y and a vertical direction Z. The transverse direction Y is a direction orthogonal to the sheet in Fig. 2. The vertical direction Z is a substantially vertical direction of the sheet in Fig. 2 and slightly tilts with respect to the perpendicular direction. In a case of Fig. 1, the axial direction X is a direction in which the right front side and the inner left side of the sheet are connected to each other. The transverse direction Y is a direction connecting from the left front side to the inner right side of the sheet. The vertical direction Z is approximately parallel to the vertical direction of the sheet.

The steering shaft 3 includes an upper shaft 14 and a lower shaft 15 each of which has a cylindrical or columnar shape. The upper shaft 14 is disposed on the rear side closer than the lower shaft 15. The upper shaft 14 and the lower shaft 15 are coaxially arranged.

The steering member 2 is connected to the rear end portion (may also be the upper end portion, but will be referred to as the rear end portion herein) 14A (one end) of the upper shaft 14.

In the upper shaft 14, at least the front end portion (may also be the lower end portion, but will be referred to as the front end portion herein) 14B has a cylindrical shape. The rear end portion (may also be the upper end portion, but will be referred to as the rear end portion herein) 15A of the lower shaft 15 is inserted from the front side through the front end portion 14B of the upper shaft 14.

In a region where the front end portion 14B of the upper shaft 14 and the rear end portion 15A of the lower shaft 15 overlap each other in the axial direction X, the upper shaft 14 and the lower shaft 15 are fitted together through spline fitting or serration fitting (not illustrated). Therefore, the upper shaft 14 and the lower shaft 15 are integrally rotatable and are relatively movable in the axial direction X. The steering shaft 3 is extendable and retractable in the axial direction X due to a relative movement of the upper shaft 14 and the lower shaft 15. Regarding the relative movement of the upper shaft 14 and the lower shaft 15, in the strict sense, only the upper shaft 14 moves.

In addition, the intermediate shaft 8 is connected to the front end portion (may also be the lower end portion, but will be referred to as the front end portion herein) 15B of the lower shaft 15 via the first universal joint 7. The front end portion of the intermediate shaft 8 is connected to the pinion shaft 10 via the second universal joint 9. Therefore, the steering shaft 3 can transmit steering torque transmitted from the steering member 2, to the steering mechanism 11 connected to the pinion shaft 10.

The column jacket 4 is a hollow body extending in the axial direction X in its entirety. The column jacket 4 is disposed coaxially with the steering shaft 3. The steering shaft 3 is accommodated in the column jacket 4. The column jacket 4 includes an upper jacket 16 and a lower jacket 17 both of which have a tubular shape extending in the axial direction X. The upper jacket 16 is positioned on the rear side (the steering member 2 side) closer than the lower jacket 17. Moreover, the upper jacket 16 and the lower jacket 17 are coaxially arranged.

An outer circumferential surface 16B of the upper jacket 16 has an octagonal shape when viewed in the axial direction X (refer to Fig. 1).

When viewed in the axial direction X, the lower jacket 17 is greater than the upper jacket 16 in diameter and is externally fitted into the upper jacket 16. In detail, a front end portion 16A of the upper jacket 16 is inserted from the rear side through a rear end portion 17A of the lower jacket 17. In this state, the upper jacket 16 is relatively movable in the axial direction X with respect to the lower jacket 17. Accordingly, the column jacket 4 is extendable and retractable in the axial direction X.

The upper jacket 16 and the upper shaft 14 are connected to each other via a first bearing 18. In addition, the lower jacket 17 and the lower shaft 15 are connected to each other via a second bearing 19. Therefore, the upper jacket 16 and the upper shaft 14, and the lower jacket 17 and the lower shaft 15 are relatively movable in the axial direction X. Accordingly, the column jacket 4 is extendable and retractable together with the steering shaft 3. The extension and retraction thereof will be referred to as "a telescopic operation". Moreover, since the steering shaft 3 is connected to the column jacket 4 via the first bearing 18 and the second bearing 19, the column jacket 4 rotatably supports the steering shaft 3.

The lower bracket 6 supports the column jacket 4 (particularly, the lower jacket 17) and connects the steering device 1 to the vehicle body 12. The lower bracket 6 includes lower movable brackets 22 and a lower fixed bracket 23.

The lower fixed bracket 23 extends in the vertical direction Z, and the upper end portion thereof is attached to the vehicle body 12 by using a bolt (not illustrated).

For example, a pair of the lower movable brackets 22 are provided in the transverse direction Y so as to interpose the lower jacket 17 therebetween. Each of the lower movable brackets 22 is connected to the upper side outer circumferential surface of a front end portion 17B of the lower jacket 17 by performing welding or the like and partially overlaps the lower fixed bracket 23 when viewed in the transverse direction Y. The lower movable brackets 22 and the lower fixed bracket 23 are connected to each other through a center shaft 24 which extends the transverse direction Y, at a position where the lower movable brackets 22 and the lower fixed bracket 23 overlap each other when viewed in the transverse direction Y. Therefore, the steering device 1 can turn in its entirety centering around the center shaft 24. The turning thereof will be referred to as "a tilt". A turning locus of the steering device 1 is parallel to the vertical direction Z.

The upper bracket 5 supports the column jacket 4 (particularly, the upper jacket 16) and connects the steering device 1 to the vehicle body 12. The upper bracket 5 includes a first bracket 20 and a second bracket 21 (brackets).

For example, the first bracket 20 has a flat plate portion 20A which extends in the transverse direction Y and a groove-shaped portion 20B which has a groove shape (a U-shaped) being open downward when viewed in the axial direction X (refer to Fig. 1). The first bracket 20 is attached to the vehicle body 12 at both the ends of the flat plate portion 20A in the transverse direction Y by using a bolt (not illustrated) or the like. A tilt groove (not illustrated) extending in the vertical direction Z is formed in each of a pair of right and left side plates 20C configuring the groove-shaped portion 20B so as to penetrate each of the side plates 20C in the thickness direction.

With reference to Fig. 1, the second bracket 21 is configured to include a pair of right and left frames 21A which are disposed on the inner side of the groove-shaped portion 20B. Each of the frames 21A is a hollow body having a substantially triangular frame shape when viewed in the axial direction X. The pair of right and left frames 21A are disposed so as to cause one corner of the substantially triangular frame-shaped portion to face one corner of the other in the transverse direction Y. Round penetration holes 21 B which penetrate the frames 21A in the transverse direction Y are respectively formed in the frames 21A. Both of the penetration holes 21 B of the frames 21A are at the same position when viewed in the transverse direction Y.

The second bracket 21 is fixed with respect to the lower bracket 6 (may be a portion of the lower bracket 6). Therefore, the second bracket 21 is supported by the first bracket 20 (the vehicle body 12) while being movable in the tilt direction (the vertical direction Z) and being fixed in the telescopic direction (the axial direction X). In other words, the second bracket 21 is supported by the vehicle body 12 in a state where the positions thereof in the axial direction X are fixed.

The upper jacket 16 is disposed in the lower end portion of an inner side portion of the groove-shaped portion 20B of the first bracket 20. An upper portion of the outer circumferential surface 16B of the upper jacket 16 in such a state is positioned between the pair of right and left frames 21A of the second bracket 21. The upper jacket 16 does not come into contact with the second bracket 21. In addition, for the convenience of description, in Fig. 2, the second bracket 21 is indicated by the one-dot chain line.

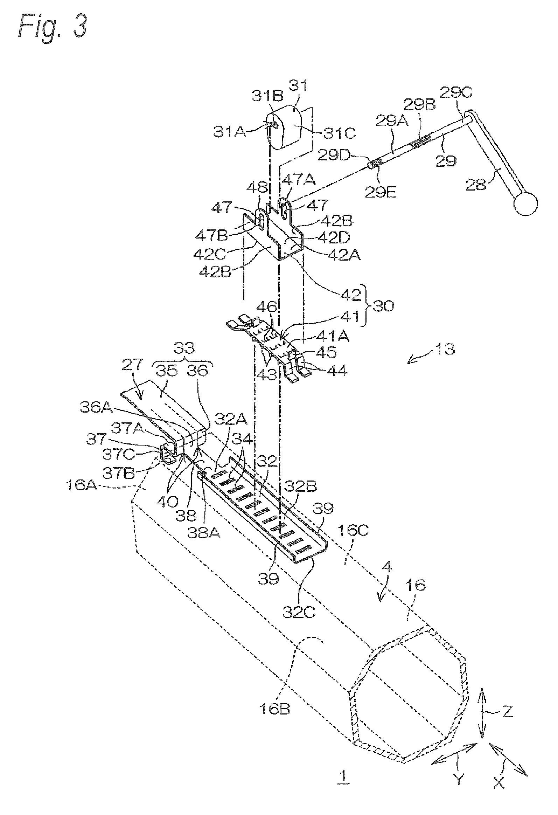

Fig. 3 is an exploded perspective view of the main portion of the steering device 1. In Fig. 3, for the convenience of description, the upper jacket 16 is indicated by the dotted line. In addition, in Fig. 3, the axial direction X is the direction in which the right front side and the inner left side are connected to each other. The transverse direction Y is the direction in which the left front side and the inner right side are connected to each other, and the vertical direction Z is the same as the vertical direction in Fig. 3. Moreover, in Fig. 3, the inner left side is the front side of the vehicle body 12, and the right front side is the rear side of the vehicle body 12.

Hereinafter, in addition to Figs. 1 and 2, description will be given with reference to Fig. 3 as well.

The above-described lock mechanism 13 is provided in the second bracket 21. The lock mechanism 13 is a mechanism which locks a relative position of the upper jacket 16 with respect to the upper bracket 5 in the axial direction X and releases the locked relative position thereof.

With reference to Fig. 3, the lock mechanism 13 includes a first engagement member 27, an operation lever 28, a rotary shaft 29, a second engagement member 30, and a cam 31.

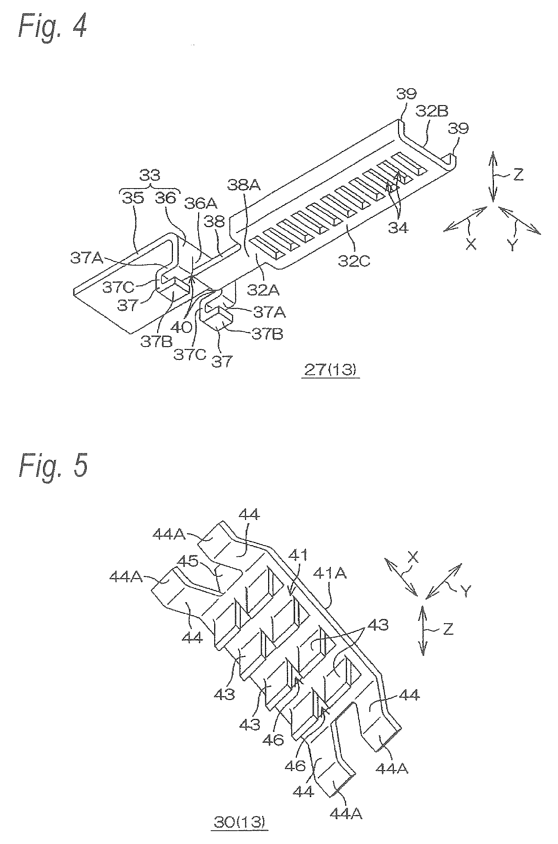

Fig. 4 is a perspective view of the first engagement member 27 which is viewed in a direction different from that in Fig. 3.

The first engagement member 27 will be described with reference to Fig. 4 as well. In addition, the first engagement member 27 may be described by applying the axial direction X, the transverse direction Y, and the vertical direction Z described above.

Since the first engagement member 27 is formed by performing pressing with one sheet of a plate material, the plate thickness of the first engagement member 27 is approximately the same in every portion thereof. The first engagement member 27 mainly includes a main body portion 32 and a deformation portion 33 (may also be referred to as a shock absorption portion 33).

The main body portion 32 has a flat plate shape elongated in the axial direction X. The main body portion 32 is disposed along the octagonal outer circumferential surface 16B (the uppermost flat surface 16C) of the upper jacket 16. In addition, upwardly bent ribs 39 are integrally provided at both the end portions of the main body portion 32 in the transverse direction Y. A plurality of engagement holes 34 (eleven in the present embodiment) slender in the transverse direction Y are provided in the main body portion 32. The engagement holes 34 penetrate the main body portion 32 in the thickness direction and are arranged in the axial direction X at equal intervals.

The deformation portion 33 is disposed on the front side closer than the main body portion 32. The deformation portion 33 has a crank shape when viewed in the transverse direction Y. The deformation portion 33 includes a first portion 35 extending in the axial direction X and a second portion 36 extending in the vertical direction Z.

The first portion 35 has a rectangular plate shape elongated in the axial direction X. The first portion 35 extends forward from the upper end portion of the second portion 36.

Engagement portions 37 are provided one each at both the ends of a lower end portion 36A of the second portion 36 in the transverse direction Y (a pair in total). Each of the pair of engagement portions 37 has a substantial U-shape tilting rearward by substantial 90° when viewed in the transverse direction Y. In detail, each of the engagement portions 37 includes a flat plate portion 37A and a flat plate portion 37B which extend so as to be parallel to each other while being vertically spaced apart from each other, and an erection portion 37C which is erected between the front end portions of the flat plate portion 37A and the flat plate portion 37B. The flat plate portion 37A is positioned above the flat plate portion 37B. The rear end portion of the flat plate portion 37A is connected to the lower end portion 36A of the second portion 36.

A connection portion 38 which connects the lower end portion 36A of the second portion 36 of the deformation portion 33 and a front end portion 32A of the main body portion 32 is provided in the first engagement member 27. The connection portion 38 has a belt shape extending in the axial direction X and has a width the transverse direction Y narrower than that of the main body portion 32. A rear end portion 38A of the connection portion 38 is connected to a substantially central portion of the lower end portion 36A of the second portion 36 in the transverse direction Y.

In the second portion 36, slits 40 which vertically extend are formed at the boundaries between the engagement portions 37 and the connection portion 38. In other words, the slits 40 are provided one each on both sides of the connection portion 38 in the transverse direction Y (a pair in total). Each of the slits 40 penetrates the second portion 36 in the thickness direction and extends haff way in the vertical direction Z from the lower end in the second portion 36.

The first engagement member 27 is disposed in the upper portion (the flat surface 16C) on the outer circumferential surface 16B of the upper jacket 16. In this case, each of the engagement portions 37 of the first engagement member 27 is hooked with respect to the front end portion 16A of the upper jacket 16 from the front side. In detail, in each of the engagement portions 37, the front end portion 16A of the upper jacket 16 is interposed between the flat plate portion 37A and the flat plate portion 37B, and the erection portion 37C abuts on the front end portion 16A from the front side. In this manner, the first engagement member 27 is attached to the upper jacket 16. The main body portion 32 may be slightly spaced apart from the flat surface 16C.

The second engagement member 30 is disposed on the upper side closer than the first engagement member 27. The second engagement member 30 includes a main body 41 and a pressing member 42 which is provided as a component independent from the main body 41.

Fig. 5 is a perspective view of the second engagement member 30 which is viewed in a direction different from that in Fig. 3. Fig. 5 depicts only the main body 41 in the second engagement member 30. The second engagement member 30 will be described by applying the axial direction X, the transverse direction Y, and the vertical direction Z described above.

With reference to Figs. 3 and 5, the main body 41 is formed of a leaf spring having a thickness in the vertical direction Z. The main body 41 is flat in the axial direction X and the transverse direction Y and is elongated in the axial direction X. Engagement projections 43, the biasing portions 44, and positioning portions 45 are integrally provided in the main body 41.

For example, each of the engagement projections 43 has a small square-piece shape and is configured to be formed by downwardly bending a portion which is punched in a channel-like manner when the main body 41 is viewed in the vertical direction Z (refer to Fig. 5). In this state, only one side of each engagement projection 43 in its square shape is connected to the main body 41. In other words, the engagement projections 43 are portions which are cut and raised from the main body 41 toward the first engagement member 27 side (downward). Since the engagement projections 43 are portions of the main body 41 formed of the leaf spring, the engagement projections 43 are elastically deformable. In addition, in the main body 41, apertures 46 are formed by cutting and raising the engagement projections 43. In this manner, it is possible to realize the elastically deformable engagement projections 43 having a simple configuration by cutting and raising the main body 41 which is formed of the leaf spring.

A plurality of the engagement projections 43 are provided in the main body 41 at uniform intervals in the axial direction X and the transverse direction Y. In the present embodiment, there are provided eight engagement projections 43. In detail, two columns each of which is configured to include four engagement projections 43 arranged in the axial direction X are arranged in the transverse direction Y. All of the engagement projections 43 are parallel to each other. Each of the engagement projections 43 tilts toward the rear lower side with respect to the axial direction X (refer to Fig. 2).

The biasing portions 44 are provided two each on both sides of the main body 41 in the axial direction X. Two biasing portions 44 on each of both sides of the main body 41 are separated from each other in the transverse direction Y. Each of the biasing portions 44 is bent in the direction in which the engagement projections 43 are cut and raised (downward) and tilts outward (any one of the front and rear directions) from the main body 41 in the axial direction X with respect to the main body 41. In each of the biasing portions 44, end portions on a side which is connected to the main body 41 and end portions 44A on a side opposite thereto are bent outward from the main body 41 in the axial direction X, thereby being parallel to the main body 41.

The positioning portions 45 are provided one each on both sides of the main body 41 in the axial direction X. Each of the positioning portions 45 is disposed between two biasing portions 44 arranged in the transverse direction Y. Each of the positioning portions 45 has a small square-piece shape and extends in a direction opposite to the direction in which the engagement projections 43 are cut and raised (upward).

With reference to Fig. 3, in the main body 41, four end portions 44A of the biasing portions 44 come into contact with a top surface 32B of the main body portion 32 of the first engagement member 27 from above. In this state, the biasing portions 44 on both sides in the transverse direction Y stride over the engagement holes 34 and are disposed on the inner side between the right and left ribs 39. In addition, in the transverse direction Y, the engagement projections 43 are respectively at the same positions as the engagement holes 34 (in the strict sense, on the inner side of the engagement holes 34).

The pressing member 42 has a groove shape (a substantial U-shape when viewed in the axial direction X) which is open upward. The pressing member 42 is elongated in the axial direction X. Specifically, a measurement of the pressing member 42 in the axial direction X is approximately the same as the interval between the positioning portions 45 of the main body 41 in the axial direction X, and a measurement of the pressing member 42 in the transverse direction Y is approximately the same as a measurement of the main body 41 in the transverse direction Y. In detail, the pressing member 42 integrally includes a flat plate portion 42A which is flat in the axial direction X and the transverse direction Y, and a pair of side plate portions 42B which extend upward from both the ends of the flat plate portion 42A in the transverse direction Y.

Protrusion portions 48 which protrude toward a direction of being separated from the flat plate portion 42A are respectively provided at substantial centers of the side plate portions 42B in the axial direction X. Penetration holes 47 each of which strides across the protrusion portions 48 and the side plate portions 42B and extends in the vertical direction Z are respectively provided on both sides of the pressing member 42 in the transverse direction Y. The penetration holes 47 penetrate the protrusion portions 48 and the side plate portions 42B in the thickness direction (the transverse direction Y). The penetration holes 47 are elongated in the vertical direction Z. Both the ends of the penetration holes 47 in the vertical direction Z are rounded.

In the pressing member 42, a bottom surface 42C of the flat plate portion 42A comes into contact with a top surface 41A of the main body 41 from above. In this state, the pressing member 42 is disposed between two positioning portions 45 in the axial direction X, and movement thereof in the axial direction X is regulated. In other words, the pressing member 42 is positioned in the main body 41 by the positioning portions 45.

The cam 31 has a substantially elliptical shape when viewed in the transverse direction Y. In the cam 31 viewed in the transverse direction Y, a circular through hole 31A which penetrates the cam 31 in the transverse direction Y is provided at a position deviated from the center in the major axis direction. The cam 31 is disposed between the pair of right and left side plate portions 42B in the pressing member 42. When viewed in the transverse direction Y, the through hole 31A of the cam 31 and portions of the penetration holes 47 of the pressing member 42 overlap each other. In the cam 31, a portion of an outer circumferential surface 31C comes into contact with a top surface 42D of the flat plate portion 42A of the pressing member 42 from above.

The rotary shaft 29 which extends in a direction intersecting (in the strict sense, orthogonal to) the axial direction X is inserted through the penetration holes 47 and the through hole 31A. The rotary shaft 29 is a component independent from the second engagement member 30. The rotary shaft 29 is movable inside the penetration holes 47 in the vertical direction Z. However, since the widths of the penetration holes 47 in the axial direction X are approximately the same as the diameter of the rotary shaft 29, movement of the rotary shaft 29 inside the penetration holes 47 in the axial direction X is regulated. Meanwhile, the rotary shaft 29 is rotatable around the axis inside the penetration holes 47.

With reference to Fig. 1, the rotary shaft 29 is also inserted through the penetration holes 21 B of the second bracket 21 and the above-described tilt grooves (not illustrated) of the first bracket 20. The rotary shaft 29 inside the penetration holes 21 B and the tilt grooves is rotatable around the axis and is movable in the vertical direction Z along the tilt grooves. As the rotary shaft 29 moves along the tilt grooves, the above-described tilt adjustment can be performed. Meanwhile, since a measurement of the groove width of each tilt groove (in the axial direction X) is approximately the same as the diameter of the rotary shaft 29, movement of the rotary shaft 29 in the axial direction X is regulated. In other words, the relative position of the rotary shaft 29 with respect to the vehicle body 12 in the axial direction X is fixed.

As described above, the cam 31 is attached to the rotary shaft 29, and the rotary shaft 29 is supported by the second bracket 21. In addition, the second engagement member 30 (that is, the pressing member 42 in which the rotary shaft 29 is inserted through the penetration holes 47, and the main body 41 which is positioned in the pressing member 42) is supported by the second bracket 21 via the rotary shaft 29 (also refer to Fig. 3).

With reference to Fig. 3, a spline 31 B which extends in the transverse direction Y is provided throughout the whole circumference on a surface (the inner circumferential surface of the cam 31) defining the through hole 31A in the cam 31. Meanwhile, a spline 29B is provided on an outer circumferential surface 29A of a portion which is inserted through the through hole 31A in the rotary shaft 29. Therefore, the cam 31 and the rotary shaft 29 are in a spline fitting state and are integrally rotatable.

The operation lever 28 is connected to one end of the rotary shaft 29 (in Fig. 3, an end portion 29C on the inner right side in the transverse direction Y). In addition, as described above, the rotary shaft 29 is supported by the second bracket 21. Therefore, the rotary shaft 29 is rotatable in accordance with an operation of the operation lever 28, and the cam 31 is eccentrically rotatable in accordance with an operation of the operation lever 28. Meanwhile, a screw groove 29E is formed on the outer circumferential surface 29A in an end portion 29D on a side opposite to the end portion 29C in the transverse direction Y. Here, the end portion 29C and the end portion 29D of the rotary shaft 29 are positioned on the outside from the frames 21A of the second bracket 21 in the transverse direction Y. Therefore, movement of the rotary shaft 29 in the transverse direction Y can be regulated by screwing a nut or the like (not illustrated) with respect to the screw groove 29E. For the convenience of description, in Figs. 1 and 3, the right and left positions of the operation lever 28 are reversed. In addition, in Fig. 1, a portion (the upper side) of the operation lever 28 (described below) is omitted, and the portion is indicated by the two-dot chain line.

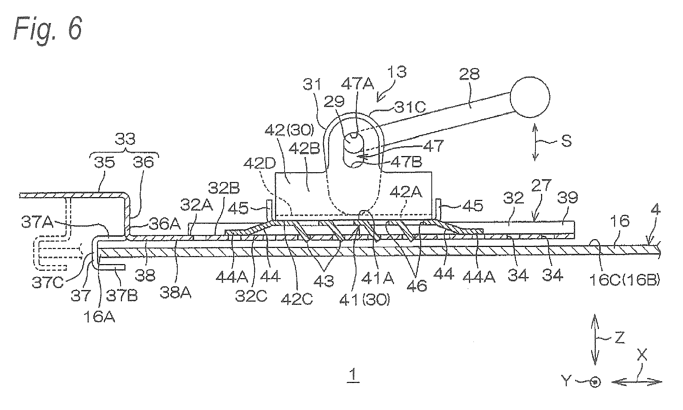

Fig. 6 is a schematic diagram illustrating the main portion of the steering device 1 in a lock state. Here, in Fig. 6, each of the members is depicted in a cross section taken in the axial direction X. However, the pressing member 42, the cam 31, and the operation lever 28 are depicted by using no cross section. The main body 41 is depicted in a cross section taken through the engagement projections 43, and the first engagement member 27 is depicted in a cross section taken through the engagement holes 34. In Fig. 6, the axial direction X is a direction which extends to the right and left side of the sheet, the transverse direction Y is a direction which extends perpendicularly to the sheet, and the vertical direction Z is a direction which extends vertically with respect to the sheet. In addition, in Fig. 6, the left side of the sheet indicates the front side of the vehicle body 12, and the right side of the sheet indicates the rear side of the vehicle body 12.

With reference to Fig. 6, as described above, when the operation lever 28 is operated and the rotary shaft 29 rotates, the cam 31 eccentrically rotates. The cam 31 comes into contact with the top surface 42D of the flat plate portion 42A of the pressing member 42 from above. Therefore, when the downward advancing quantity of the cam 31 increases in accordance with a rotation of the rotary shaft 29, the flat plate portion 42A is pressed downward by the cam 31. Accordingly, until the rotary shaft 29 arrives at upper end portions 47A of the penetration holes 47, the pressing member 42 moves downward in its entirety. In accordance with a movement thereof, the main body 41 of the second engagement member 30 is pressed by the pressing member 42, and moves downward. As the main body 41 moves downward, each of the end portions 44A of the biasing portions 44 slides to the outside of the main body 41 in the axial direction X with respect to the top surface 32B of the main body portion 32 of the first engagement member 27. Accordingly, each of the biasing portions 44 is warped so as to approach the top surface 32B of the main body portion 32, and the main body 41 is in a state of being vertically compressed in its entirety between the pressing member 42 and the first engagement member 27. In other words, the pressing member 42 presses the main body 41 against the first engagement member 27 by being pressed by the cam 31. Accordingly, each of the engagement projections 43 of the main body 41 engages with the engagement holes 34 by being fitted into the engagement holes 34 from above at the same position in the axial direction X. A position of the second engagement member 30 when the engagement projections 43 engage with the engagement holes 34 in such a manner (a position in the vertical direction Z) will be referred to as "a lock position". In a state where the engagement projections 43 engage with the engagement holes 34, the upper jacket 16 cannot move in the axial direction X. Therefore, the position of the steering member 2 in the axial direction X is fixed. In addition, a state of the steering device 1 in which the position of the steering member 2 is fixed in such a manner will be referred to as "a lock state".

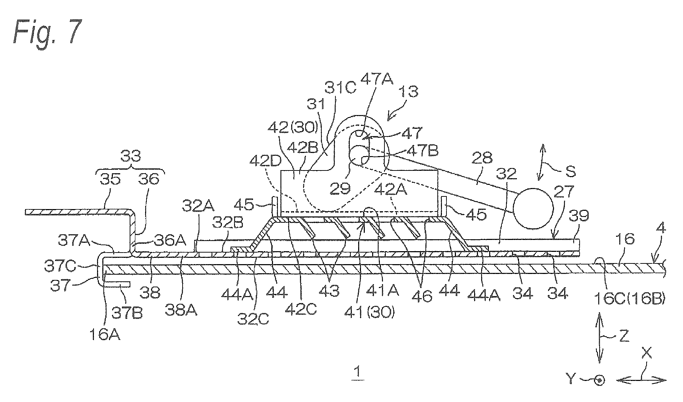

Fig. 7 is a schematic diagram illustrating the main portion of the steering device 1 in a release state. Here, the postures in Fig. 7 coincide with those in Fig. 6.

As the operation lever 28 is operated in a direction opposite to that in a precedent in a state where the second engagement member 30 is in the lock position, and the rotary shaft 29 is rotated clockwise (may be less than one rotation) when viewed in the transverse direction Y, the downward advancing quantity of the cam 31 gradually decreases. In addition, the pressing member 42 is biased upward due to a restoring force of each biasing portion 44 which has been warped in the main body 41. Accordingly, in accordance with a rotation of the rotary shaft 29, the pressing member 42 tends to return to the state before being compressed, and thus, the pressing member 42 moves upward. As illustrated in Fig. 7, when the pressing member 42 moves upward in its entirety until the rotary shaft 29 arrives at lower end portions 47B of the penetration holes 47, an operation of the operation lever 28 stops. In this state, all of the engagement projections 43 which have been fitted into the engagement holes 34 by that time are disengaged upward from the engagement holes 34. Therefore, engagement between the engagement projections 43 and the engagement holes 34 is released. A position of the second engagement member 30 when the engagement projections 43 are disengaged from the engagement holes 34 in such as manner (a position in the vertical direction Z) will be referred to as "a release position". As described above, each of the biasing portions 44 in a warped state biases the second engagement member 30 toward the release position at all times.

At the release position, movement of the first engagement member 27 in the axial direction X is not regulated by the second engagement member 30. Therefore, the upper jacket 16 which engages with the engagement portions 37 of the first engagement member 27 by moving the steering member 2 back and forth in the axial direction X can move in the axial direction X. In other words, a telescopic adjustment can be performed. In this manner, as the second engagement member 30 is reliably moved to the release position by the biasing portions 44 which is provided in the main body 41, the engagement projections 43 can be disengaged from the engagement holes 34 in order to perform a positional adjustment of the steering member 2. When performing a telescopic adjustment, since the biasing portions 44 of the second engagement member 30 slide on the top surface 32B of the main body portion 32 of the first engagement member 27, there is no unnecessary load applied to a telescopic adjustment. In addition, a state of the steering device 1 in which the locked steering member 2 is released in such a manner will be referred to as "a release state".

Furthermore, as the operation lever 28 is operated in a state where the second engagement member 30 is in the release position, and the rotary shaft 29 is rotated counterclockwise when viewed in the transverse direction Y, the second engagement member 30 is pressed due to an eccentric rotation of the cam 31, thereby arriving at the lock position again as illustrated in Fig. 6. In other words, the second engagement member 30 is movable between the lock position (refer to Fig. 6) and the release position (refer to Fig. 7) by an eccentric rotation of the cam 31 in accordance with a rotation of the rotary shaft 29. In other words, the cam 31 moves the second engagement member 30 between the lock position and the release position. In this manner, it is possible to move the second engagement member 30 between the lock position and the release position in a simple configuration in which the cam 31 attached to the rotary shaft 29 eccentrically rotates.

Subsequently, description will be given regarding an operation of the steering device 1 at the time of vehicle collision (particularly, so-called secondary collision).

At the time of secondary collision, the steering shaft 3 and the column jacket 4 retract due to a shock transmitted from the steering member 2. In response to the retraction, the upper jacket 16 moves to the front side of the vehicle body 12 in the axial direction X as indicated by the dotted line in Fig. 6. However, generally, since the second engagement member 30 is at the lock position while a vehicle is driven, the engagement projections 43 engage with the engagement holes 34. Therefore, the main body portion 32 of the first engagement member 27 maintains a state where the relative position is fixed with respect to the vehicle body 12 at the time of secondary collision as well. Accordingly, only the engagement portions 37 which engage with the front end portion 16A of the upper jacket 16 tend to move toward the front side simultaneously with the retraction. Then, the slits 40 advance along the dotted line indicated in the deformation portion 33 in Fig. 3, and the deformation portion 33 is thereby torn (deformed). In other words, the deformation portion 33 absorbs a shock (EA: energy absorption) at the time of secondary collision by being deformed while accompanying the upper jacket 16 at the time of secondary collision. In this manner, at the time of secondary collision, the steering device 1 absorbs a shock through the deformation of the deformation portion 33 in addition to the retraction of the steering shaft 3 and the column jacket 4. As described above, the main body 41 can perform both a function of locking the position of the steering member 2 and a function of absorbing a shock at the time of secondary collision.

In addition, a movement direction (the vertical direction Z) of the second engagement member 30 between the lock position and the release position is different from a rotating direction S of the rotary shaft 29.

Therefore, even though a shock at the time of secondary collision is applied to the steering device 1 and tends to cause the second engagement member 30 at the lock position to move to the release position, since the movement of the second engagement member 30 needs to be converted into a rotary motion of the rotary shaft 29, the rotary shaft 29 does not immediately rotate. As a result thereof, it is possible to maintain the second engagement member 30 while remaining at the lock position. Furthermore, since the engagement projections 43 can be elastically deformed so as not to be disengaged from the engagement holes 34 at the time of secondary collision, due to the elastic deformation thereof, it is also possible to maintain the second engagement member 30 while remaining at the lock position.

Accordingly, in the steering device 1, the locked position of the steering member 2 can be prevented from being abruptly released.

In addition, when the operation lever 28 is operated so as to move the second engagement member 30 to the lock position, even though the engagement projections 43 and the engagement holes 34 of the first engagement member 27 do not coincide with each other in the axial direction X, the engagement projections 43 can be elastically deformed by coming into contact with the first engagement member 27 (a portion other than the engagement holes 34). Therefore, since an operation of the operation lever 28 does not become stiff in the midst thereof, it is possible to operate the operation lever 28 to the end. Then, when the engagement projections 43 and the engagement holes 34 coincide with each other for some reason at the time of secondary collision or the like, since the engagement projections 43 can engage with the engagement holes 34 by being elastically deformed, it is possible to prevent the locked position of the steering member 2 from being abruptly released thereafter.

Furthermore, in the second engagement member 30 while being at the lock position, since the pressing member 42 presses the main body 41 provided with the engagement projections 43 against the first engagement member 27, it is possible to maintain the second engagement member 30 while remaining at the lock position. Accordingly, it is possible to further prevent the locked position of the steering member 2 from being abruptly released.

The invention is not limited to the embodiment described above, and various changes can be made within the scope of Claims.

For example, in the second engagement member 30, the main body 41 and the pressing member 42 may be integrated with each other.

In addition, the lock mechanism 13 described in the embodiment can also be applied to a tilt configuration. In this case, a relative movement of the second bracket 21 in the vertical direction Z with respect to the first bracket 20 is regulated, the movement direction of the second engagement member 30 becomes the axial direction X or the transverse direction Y. In accordance with an operation of the operation lever 28, the second engagement member 30 is moved in a direction approaching the first engagement member which is provided in the first bracket 20. As the engagement projections 43 and the engagement holes 34 engage with each other due to the movement thereof, it is possible to prevent the second bracket 21 from relatively moving in the vertical direction Z with respect to the first bracket 20. In other words, the second bracket 21 is in a state of being fixed in the tilt direction. Meanwhile, as the second engagement member 30 is moved in a direction of being separated from the first engagement member of the first bracket 20 by operating the operation lever 28, the engagement between the engagement projections 43 and the engagement holes 34 can be released. In this state, the second bracket 21 is movable in the tilt direction. In other words, a tilt adjustment can be performed.

Subsequently, a first modification example of the present invention will be described.

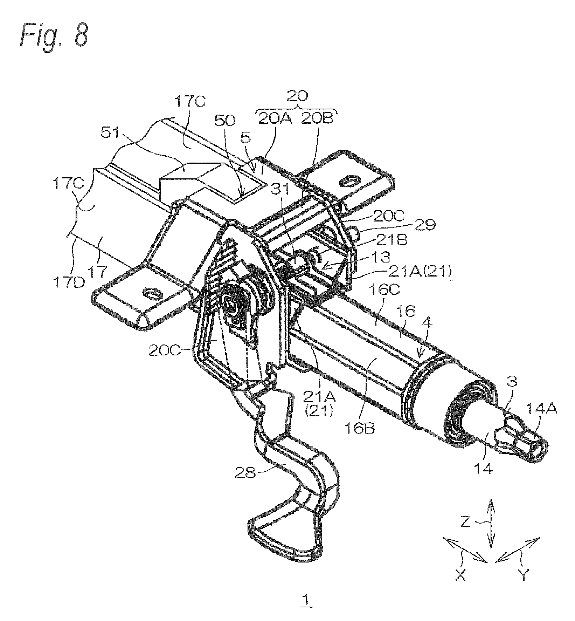

Fig. 8 is a diagram of the first modification example of the present invention applied to that in Fig. 1. Here, the posture of each member in Fig. 8 coincides with that in Fig. 1. In Fig. 8, the same reference numerals and signs will be applied to members similar to the above-described members, and description thereof will be omitted.

With reference to Fig. 8, the lower jacket 17 in the first modification example of the present invention has a substantial U-shape when viewed in the axial direction X. In other words, the lower jacket 17 is a groove-shaped member of which the upper side is open. In detail, the lower jacket 17 includes a pair of side plate portions 17C which are oriented in the transverse direction Y, and a curved connection portion 17D which connects the pair of side plate portions 17C at the end portion on the lower side. The rotary shaft 29 (refer to Fig. 3) of the above-described operation lever 28 is loosely inserted through long holes (not illustrated, the same shapes as the penetration holes 47 of the pressing member 42) which are formed in the pair of side plate portions 17C. The rotary shaft 29 is supported by the pair of side plate portions 17C so as to be movable along the long holes.

A notch groove 50 recessed to have a concave shape on the rear side is formed at a substantial center in the transverse direction Y at the front end of the flat plate portion 20A of the first bracket 20. The notch groove 50 penetrates the flat plate portion 20A in the vertical direction Z.

A portion of a housing (a pyro-housing) 51 fills the inside of the notch groove 50. The housing 51 has a trapezoidal box shape when viewed in the transverse direction Y. When viewed from above, the housing 51 is accommodated inside the lower jacket 17 (above the upper jacket 16) and is upwardly exposed. In addition, the housing 51 mostly overlaps the side plate portions 17C of the lower jacket 17 when viewed in the transverse direction Y. The notch groove 50 is provided so as to prevent the housing 51 and the flat plate portion 20A from interfering with each other at the time of a tilt adjustment. Therefore, when the housing 51 is disposed at a position where the housing 51 does not overlap the flat plate portion 20A when viewed in the vertical direction Z, the notch groove 50 is not necessary.

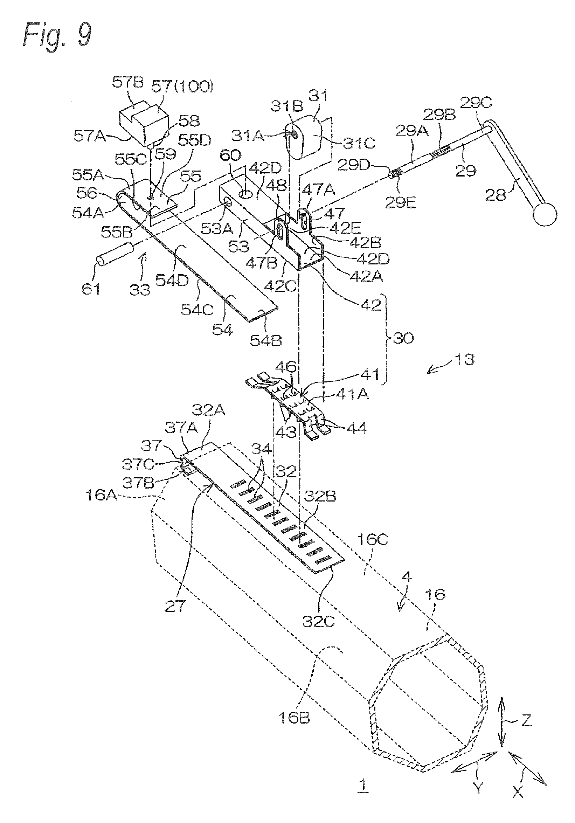

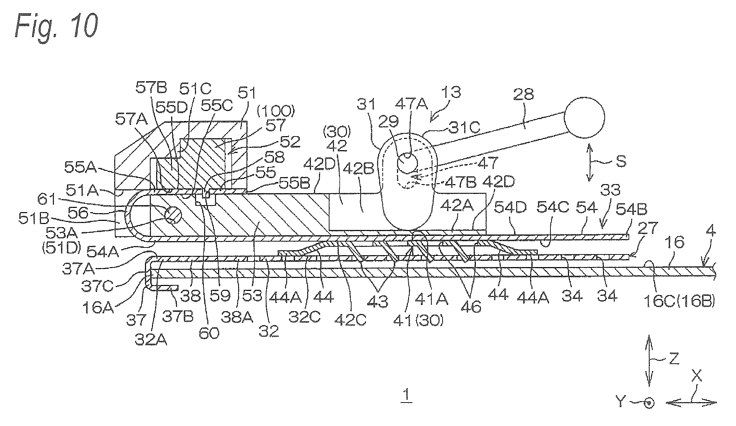

Fig. 9 is a diagram of the first modification example applied to that in Fig. 3. Fig. 10 is a diagram of the first modification example applied to that in Fig. 6. The posture of each member in Fig. 9 coincides with that in Fig. 3. In addition, the posture of each member in Fig. 10 coincides with that in Fig. 6. In Figs. 9 and 10, the same reference numerals and signs will be applied to members similar to the above-described members, and description thereof will be omitted.

With reference to Fig. 10, a space 52 is provided in the housing 51. For example, the space 52 has an L-shape tilting counterclockwise by substantial 90° when viewed in the transverse direction Y. Therefore, in the space 52, the front side portion is vertically smaller than the rear side portion. In order to define such a space 52, a step difference portion 51C is provided on the upper side on the inner surface of the housing 51. In addition, the space 52 is downwardly exposed from the housing 51.

With reference to Fig. 9, the first engagement member 27 of the first modification example is configured to include only the main body portion 32 and the engagement portions 37. In other words, in the first engagement member 27 of the first modification example, the connection portion 38 and the shock absorption portion 33 described above (refer to Fig. 3) are omitted. The main body portion 32 has a flat plate shape elongated in the axial direction X. The plurality of engagement holes 34 (eleven, same as those in the present embodiment) slender in the transverse direction Y are provided in the main body portion 32. The engagement holes 34 penetrate the main body portion 32 in the thickness direction and are arranged in the axial direction X at equal intervals. The main body portion 32 is disposed along the octagonal outer circumferential surface 16B (the uppermost flat surface 16C) of the upper jacket 16. In addition, in the first engagement member 27 of the first modification example, there is no rib 39 (refer to Fig. 3) provided in the main body portion 32.

One engagement portion 37 is provided in a continuous manner with respect to the entire region of the front end portion 32A of the main body portion 32 in the transverse direction Y. In the first modification example, the above-described flat plate portion 37A of the engagement portion 37 becomes a portion of the main body portion 32.

In the main body 41 of the second engagement member 30, the above-described positioning portions 45 (refer to Fig. 3) are omitted.

In the pressing member 42, a box portion 53 is integrally provided at an end portion 42E on the front side. The box portion 53 is a substantially rectangular parallelepiped elongated in the axial direction X. The bottom surface of the box portion 53 is flush with the bottom surface 42C of the pressing member 42. In addition, both side surfaces of the box portion 53 in the transverse direction Y are flush with the outer surface of the corresponding side plate portions 42B in the transverse direction Y. In addition, the upper end portion of the side plate portions 42B coincides with the top surface of the box portion 53. In other words, the pressing member 42 is a substantially rectangular parallelepiped elongated in the axial direction X in its entirety and has a shape partially notched from the rear upper side. The flat plate portion 42A and the pair of side plate portions 42B are formed in the rear side portion of the box portion 53 by the notch.

The shock absorption portion 33 is disposed between the main body 41 and the pressing member 42. The shock absorption portion 33 includes a first plate portion 54, a second plate portion 55, and a curved portion 56. The first plate portion 54 has a flat plate shape elongated in the axial direction X. The second plate portion 55 has a plate shape being disposed so as to face the first plate portion 54 on the upper side closer than the first plate portion 54. The second plate portion 55 has the same size as that of the first plate portion 54 in the transverse direction Y. A front end portion 55A of the second plate portion 55 is disposed at the same position as that of a front end portion 54A of the first plate portion 54 in the axial direction X. In addition, a rear end portion 55B of the second plate portion 55 is disposed on the front side closer than a rear end portion 54B of the first plate portion 54. In other words, the first plate portion 54 is longer approximately several times than the second plate portion 55 in the axial direction X.

The curved portion 56 has a curved plate shape connecting the front end portion 54A and the front end portion 55A. The curved portion 56 is curved so as to bulge forward further than the front end portion 54A and the front end portion 55A, and the curved portion 56 smoothly connects the first plate portion 54 and the second plate portion 55. The shape of such a shock absorption portion 33 is formed by causing the tip end of one sheet of a plate material to be curved so as to be folded back. Therefore, a bottom surface 54C of the first plate portion 54 leads to a top surface 55D of the second plate portion 55, and a top surface 54D of the first plate portion 54 leads to a bottom surface 55C of the second plate portion 55.

In the first modification example, the top surface 41A of the main body 41 and the bottom surface 42C of the pressing member 42 do not come into contact with each other. The bottom surface 54C of the first plate portion 54 of the shock absorption portion 33 comes into contact with the top surface 41A of the main body 41 from above. In addition, the bottom surface 54C and the top surface 41A are bonded to each other by welding, for example. As a method of bonding thereof, glueing, caulking, engaging (hooking), and the like can be exemplified (the same hereinafter). As the bottom surface 54C and the top surface 41A are bonded together, the shock absorption portion 33 and the main body 41 are integrally provided.

The bottom surface 42C of the pressing member 42 comes into contact (surface contact) with the top surface 54D of the first plate portion 54 of the shock absorption portion 33 from above (refer to Fig. 10). In addition, the bottom surface 55C of the second plate portion 55 comes into contact (surface contact) with respect to the top surface 42D of the box portion 53 of the pressing member 42 from above. In this manner, the box portion 53 of the pressing member 42 is in a state of being pinched vertically by the first plate portion 54 and the second plate portion 55. However, the top surface 54D of the first plate portion 54 and the bottom surface 55C of the second plate portion 55 (that is, the shock absorption portion 33 in its entirety) are not bonded to the pressing member 42, thereby being relatively movable.

With reference to Fig. 10, the above-described housing 51 is disposed so as to cover the second plate portion 55 and the curved portion 56 of the shock absorption portion 33, and the front side portion of the box portion 53 of the pressing member 42 from above. In the housing 51, a pair of side plate portions 51 B are provided at both the ends of a bottom surface 51A thereof in the transverse direction Y. The pair of side plate portions 51 B extend downward from the bottom surface 51A and face each other. The side plate portions 51 B extend along both side surfaces of the box portion 53 in the transverse direction Y and reach the vicinity of the bottom surface 42C of the pressing member 42. In the space 52 of the housing 51, the fixing-releasing portion 57 is fixed so as not to relatively move with respect to the housing 51. The fixing-releasing portion 57 has an L-shape tilting counterclockwise by 90° when viewed in the transverse direction Y, and the fixing-releasing portion 57 is a block extending in the transverse direction Y. In detail, a bottom surface 57A of the fixing-releasing portion 57 is a flat surface, and a front side region on the top surface of the fixing-releasing portion 57 is provided with a step portion 57B in which the front side region is recessed downward. Due to the step portion 57B, the fixing-releasing portion 57 exhibits the L-shape when viewed in the transverse direction Y.

In addition, the bottom surface 57A of the fixing-releasing portion 57 is provided with a columnar locking portion 58 which extends downward from the bottom surface 57A. In the second plate portion 55 of the shock absorption portion 33, a locking hole 59 is provided at a position which coincides with the locking portion 58 in the axial direction X and the transverse direction Y. The locking hole 59 has a columnar shape which is slightly greater than the locking portion 58. The locking hole 59 vertically penetrates the second plate portion 55.

Furthermore, in the box portion 53 of the pressing member 42, a locking hole 60 is provided at a position overlapping the locking portion 58. The locking hole 60 has a concavity shape extending downward from the top surface 42D of the box portion 53, and the locking hole 60 is greater than the locking hole 59 more than a little when viewed from above. The locking portion 58 is inserted through the locking hole 59. Since the locking hole 60 is large in size as described above, it is possible to receive a portion of the locking portion 58 protruding through the locking hole 59 with enough room so as to prevent the pressing member 42 from being in contact therewith. However, the locking portion 58 does not necessarily protrude to the locking hole 60.

Here, a penetration hole 53A which penetrates the box portion 53 in the transverse direction Y is formed in the front end portion of the box portion 53. In addition, in the pair of side plate portions 51 B of the housing 51, penetration holes 51 D are respectively provided at positions overlapping the penetration hole 53A when viewed in the transverse direction Y. A center shaft 61 is inserted through the penetration hole 53A and the penetration holes 51 D. The center shaft 61 has a columnar shape extending in the transverse direction Y. The center shaft 61 is also inserted through the pair of side plate portions 17C of the lower jacket 17. Accordingly, the box portion 53 and the housing 51 are supported by the lower jacket 17 so as to be able to oscillate centering around the center shaft 61.

In the first modification example, similar to the above-described embodiment, the cam 31 comes into contact with the top surface 42D of the flat plate portion 42A of the pressing member 42 from above. Therefore, when the downward advancing quantity of the cam 31 increases in accordance with a rotation of the rotary shaft 29 resulted by an operation of the operation lever 28, the flat plate portion 42A is pressed downward by the cam 31. Accordingly, until the rotary shaft 29 arrives at the upper end portions 47A of the penetration holes 47 of the pressing member 42, the pressing member 42 moves downward (oscillate) in its entirety. In accordance with a movement thereof, in the second engagement member 30, each of the biasing portions 44 is warped, and the main body 41 is pressed by the pressing member 42 via the first plate portion 54 of the shock absorption portion 33, thereby moving downward. Accordingly, each of the engagement projections 43 of the main body 41 engages with the engagement holes 34 by being fitted into the engagement holes 34 from above at the same position in the axial direction X. In other words, the second engagement member 30 reaches the above-described lock position. Since the upper jacket 16 cannot move in the axial direction X in a state where the first plate portion 54 of the shock absorption portion 33 is strongly pinched between the main body 41 and the pressing member 42 of the second engagement member 30, and the engagement projections 43 engage with the engagement holes 34, the position of the steering member 2 in the axial direction X is fixed. Therefore, the steering device 1 is in a lock state.

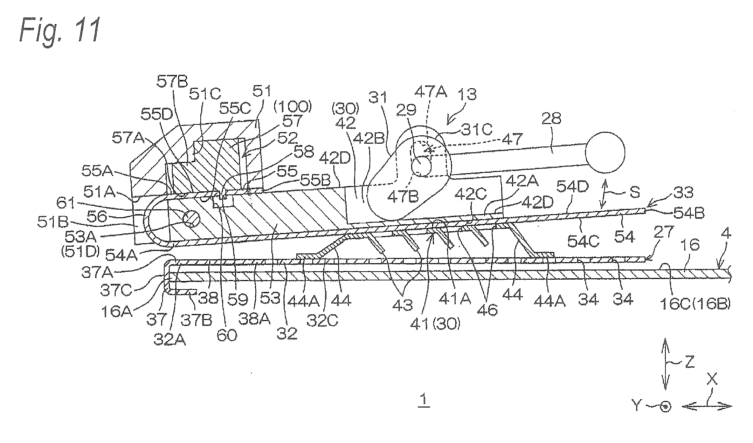

Fig. 11 is a diagram of the first modification example applied to that in Fig. 7. The posture of each member in Fig. 11 coincides with that in Fig. 7. In Fig. 11, the same reference numerals and signs will be applied to members similar to the above-described members, and description thereof will be omitted.

With reference to Fig. 11, the downward advancing quantity of the cam 31 is gradually decreased by reversely operating the operation lever 28 from a state where the second engagement member 30 has been at the lock position. As a result, the pressing member 42 is biased upward due to a restoring force of each biasing portion 44 which has been warped in the main body 41. Accordingly, in accordance with a rotation of the rotary shaft 29 resulted by an operation of the operation lever 28, the pressing member 42 tends to return to the state before being compressed. Here, as described above, the center shaft 61 is inserted through the housing 51, the pressing member 42, and the lower jacket 17. Accordingly, the pressing member 42 which has been biased upward oscillates counterclockwise centering around the center shaft 61. As illustrated in Fig. 11, when the pressing member 42 oscillates in its entirety until the rotary shaft 29 arrives at the lower end portion 47B of the penetration holes 47 of the pressing member 42, an operation of the operation lever 28 stops. In this state, in the pressing member 42, the rear side is in a state of slightly tilting upward compared to the front side. Since each of the biasing portions 44 in such a state tends to return to the state before being compressed while biasing the pressing member 42, the biasing portions 44 on the front side is warped further than the biasing portions 44 on the rear side. Therefore, in the top surface 41A of the main body 41, the rear side is in a state of tilting upward with respect to the front side. In accordance therewith, the shock absorption portion 33 which has been bonded to the main body 41 is in a state of tilting at the same angle as that of the top surface 41A.

In addition, similar to the pressing member 42, since the housing 51 is also inserted through the center shaft 61, the housing 51 is in a state of tilting by the same angle as that of the pressing member 42 in accordance with an oscillation of the rotary shaft 29. In accordance with the tilt of the housing 51, the fixing-releasing portion 57 fixed to the housing 51 is in a state of tilting by the same angle as that of the housing 51.

In this state, all of the engagement projections 43 which have been fitted into the engagement holes 34 by that time are disengaged upward from the engagement holes 34. Therefore, engagement between the engagement projections 43 and the engagement holes 34 is released. In other words, the engagement holes 34 have arrived at the above-described release position. Each of the biasing portions 44 in a warped state biases the second engagement member 30 toward the release position at all times.

When performing a telescopic adjustment, since the biasing portions 44 of the second engagement member 30 slide on the top surface 32B of the main body portion 32 of the first engagement member 27, it is possible to smoothly perform a telescopic adjustment. The steering device 1 in this case is in a release state.

Subsequently, description will be given regarding an operation of the steering device 1 at the time of vehicle collision (at the time of secondary collision) in the first modification example.

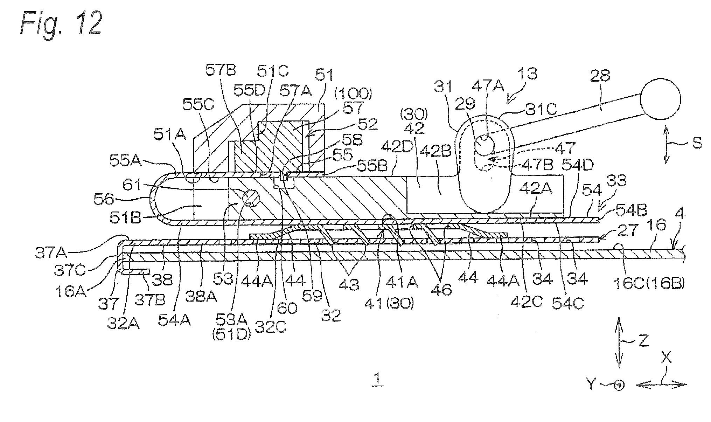

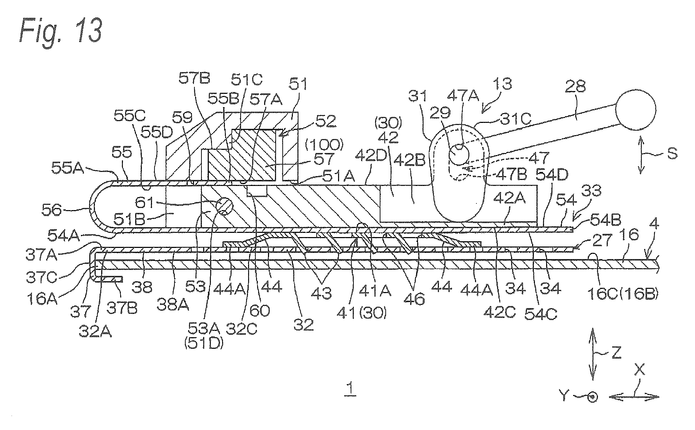

Fig. 12 illustrates a state of that in Fig. 6 after secondary collision. Fig. 13 illustrates a state after secondary collision in a state where a fixing-releasing portion 57 has released a fixed portion of the shock absorption portion 33 in the first modification example. The posture of each member in Figs. 12 and 13 coincides with that in Fig. 6. In Figs. 12 and 13, the same reference numerals and signs will be applied to members similar to the above-described members, and description thereof will be omitted.

With reference to Figs. 12 and 13, as described above, the upper jacket 16 moves to the front side of the vehicle body 12 in the axial direction X due to a retraction of the steering shaft 3 and the column jacket 4 at the time of secondary collision. Since the second engagement member 30 in a normal state is at the lock position, the engagement projections 43 engage with the engagement holes 34. Therefore, for being integrated together, the first engagement member 27, the main body 41 of the second engagement member 30, and the first plate portion 54 of the shock absorption portion 33 move toward the front side of the vehicle body 12 at the time of secondary collision in accordance with a movement of the upper jacket 16.

Here, in a normal state, the locking portion 58 of the fixing-releasing portion 57 is inserted through the locking hole 59 of the shock absorption portion 33 (refer to Fig. 10). The locking portion 58 can maintain a state of retreating inside the fixing-releasing portion 57 or protruding from the fixing-releasing portion 57 in accordance with magnitude of a shock at the time of secondary collision. In detail, the fixing-releasing portion 57 is a pyro-technical switch (pyro switch) 100 as well. The fixing-releasing portion 57 is electrically connected to a control unit (for example, an electronic control unit (ECU), not illustrated) which controls a position of the fixing-releasing portion 57 in the vertical direction Z. The control unit maintains the position of the locking portion 58 in a state where a vehicle is driven when a shock (which is detected by a separately installed sensor) at the time of secondary collision is equal to or greater than predetermined magnitude. In other words, the locking portion 58 is maintained in a state of being inserted through the locking hole 59. A position of the locking portion 58 in such a state will be referred to as "an advance position". Meanwhile, the control unit moves the locking portion 58 upward when a shock at the time of secondary collision is equal to or less than the predetermined magnitude. Then, the locking portion 58 enters the inside of the fixing-releasing portion 57 so as not to be downwardly exposed from the bottom surface 57A, thereby being maintained in the state thereof. Accordingly, the locking portion 58 is maintained in a state of being separated upward from the locking hole 59. A position of the locking portion 58 in such a state will be referred to as "a retreat position". In detail, the control unit detonates gunpowder laid in the pyro switch 100, thereby moving the locking portion 58 from the advance position to the retreat position.

With reference to Fig. 12, in a state where the locking portion 58 is at the advance position, the position of the second plate portion 55 of the shock absorption portion 33 in the axial direction X is determined by the fixing-releasing portion 57. Therefore, at the time of secondary collision, the first engagement member 27, the main body 41 of the second engagement member 30, and the first plate portion 54 of the shock absorption portion 33 move toward the front side of the vehicle body 12 in accordance with a movement of the upper jacket 16. However, the second plate portion 55 is fixed in the axial direction X and cannot move toward the front side (maintained in a state before a secondary collision).

Therefore, as the first plate portion 54 moves toward the front side due to a secondary collision, the shock absorption portion 33 is deformed so as to be seen as if the curved portion 56 moves toward the front side. In accordance with the deformation of the shock absorption portion 33, a shock at the time of secondary collision is absorbed. In this manner, in order to cause the shock absorption portion 33 to be deformed at the time of secondary collision, the fixing-releasing portion 57 can fix the second plate portion 55 (a portion) of the shock absorption portion 33 in the axial direction X.

In addition, at the time of secondary collision as well, the main body 41 biases the shock absorption portion 33 upward. Therefore, when the first plate portion 54 moves toward the front side, the top surface 54D of the first plate portion 54 is pressed against the bottom surface 42C of the pressing member 42. Therefore, the first plate portion 54 slides with respect to the pressing member 42. A shock at the time of secondary collision is also absorbed due to the friction between the top surface 54D and the bottom surface 42C generated at the time thereof.

In this manner, at the time of secondary collision (at the time of vehicle collision), the shock absorption portion 33 can absorb a shock at the time of secondary collision by being deformed while accompanying the upper jacket 16 or sliding with respect to the pressing member 42.

With reference to Fig. 13, in a state where the locking portion 58 is at the retreat position, the locking portion 58 is separated from the locking hole 59. Therefore, the second plate portion 55 of the shock absorption portion 33 positioned by the locking portion 58 in the axial direction X is released. Therefore, at the time of secondary collision, in addition to the first engagement member 27, the main body 41 of the second engagement member 30, and the first plate portion 54 of the shock absorption portion 33, the second plate portion 55 (that is, the shock absorption portion 33 in its entirety) also move toward the front side of the vehicle body 12 in accordance with a movement of the upper jacket 16. Therefore, the shock absorption portion 33 is scarcely deformed. Accordingly, a shock at the time of secondary collision is absorbed due to friction which is generated when the first plate portion 54 and the second plate portion 55 of the shock absorption portion 33 slide with respect to the pressing member 42 (friction between the top surface 54D and the bottom surface 42C, and friction between the bottom surface 55C and the top surface 42D). In this manner, the fixing-releasing portion 57 can release a fixed portion (the second plate portion 55) of the shock absorption portion 33 in the axial direction X so as to cause the shock absorption portion 33 to slide with respect to the pressing member 42 at the time of secondary collision.

As described above, it is possible to appropriately absorb a shock by selecting deformation of the shock absorption portion 33 or sliding of the shock absorption portion 33 (with respect to the pressing member 42) by the position of the fixing-releasing portion 57 (the advance position or the retreat position of the locking portion 58) in accordance with magnitude of a shock at the time of vehicle collision.

Subsequently, a second modification example of the present invention will be described.

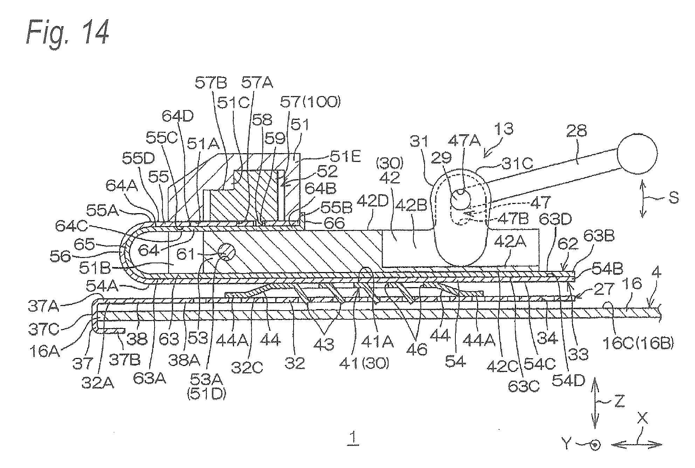

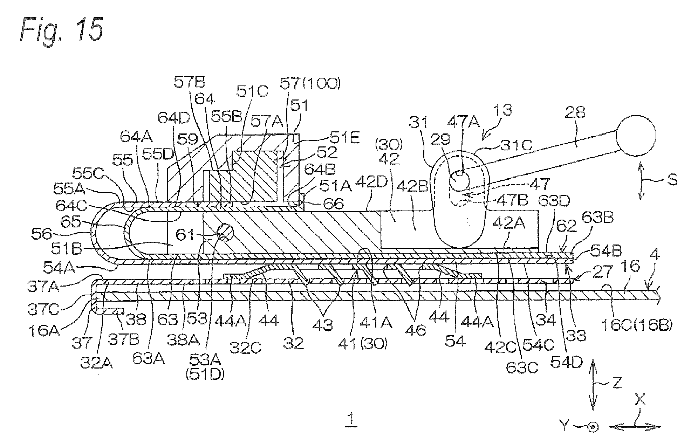

Fig. 14 is a diagram of the second modification example of the present invention applied to that in Fig. 12. Fig. 15 is a diagram of the second modification example applied to that in Fig. 13. The posture of each member in Figs. 14 and 15 coincides with that in Fig. 6. In Figs. 14 and 15, the same reference numerals and signs will be applied to members similar to the above-described members, and description thereof will be omitted.

With reference to Fig. 14, in the second modification example, a second shock absorption portion 62 extending along the shock absorption portion 33 is provided between the main body 41 and the pressing member 42. The second shock absorption portion 62 is formed to be approximately the same as the shock absorption portion 33 and includes a first plate portion 63, a second plate portion 64, and a curved portion 65.

The first plate portion 63 has a flat plate shape elongated in the axial direction X. The first plate portion 63 is interposed between the first plate portion 54 of the shock absorption portion 33 and the pressing member 42. A rear end portion 63B of the first plate portion 63 is bonded (by performing the above-described welding or the like) to the rear end portion 54B of the first plate portion 54.

The second plate portion 64 has a plate shape being disposed so as to face the first plate portion 63 on the upper side closer than the first plate portion 63. The second plate portion 64 has the same size as that of the first plate portion 63 of the shock absorption portion 33 in the transverse direction Y. A front end portion 64A of the second plate portion 64 is disposed at the same position as that of a front end portion 63A of the first plate portion 63 in the axial direction X. In addition, a rear end portion 64B of the second plate portion 64 is disposed on the front side closer than the rear end portion 63B of the first plate portion 63 of the shock absorption portion 33. In other words, the first plate portion 63 is longer than the second plate portion 64 in the axial direction X. The second plate portion 64 is interposed between the second plate portion 55 of the shock absorption portion 33 and the pressing member 42. A rib 66 which is upwardly bent at the rear end portion 64B is integrally provided in the second plate portion 64. The rib 66 abuts on a rear end portion 51 E of the housing 51 from the rear side. Therefore, the second plate portion 64 (a portion of the second shock absorption portion 62) is fixed in the axial direction X.

The curved portion 65 has a plate shape connecting the front end portion 63A and the front end portion 64A. The curved portion 65 is curved so as to bulge forward further than the front end portion 63A and the front end portion 64A, and the curved portion 65 smoothly connects the first plate portion 63 and the second plate portion 64. Similar to the shock absorption portion 33, the shape of such a second shock absorption portion 62 is formed by causing the tip end of one sheet of a plate material to be curved so as to be folded back. Therefore, a bottom surface 63C of the first plate portion 63 leads to a top surface 64D of the second plate portion 64, and a top surface 63D of the first plate portion 63 leads to a bottom surface 64C of the second plate portion 64. The curved portion 65 is parallel to the curved portion 56 of the shock absorption portion 33 from the rear side. In detail, the front surface of the curved portion 65 (a surface leads to the top surface 64D and the bottom surface 63C) is in surface contact with the curved portion 56. In this manner, the second shock absorption portion 62 is disposed so as to overlap the shock absorption portion 33.

The second shock absorption portion 62 is deformed while accompanying the upper jacket 16 at the time of secondary collision. In detail, since the first plate portion 63 of the second shock absorption portion 62 is fixed to the first plate portion 54 of the shock absorption portion 33 in the rear end portion 63B, the first plate portion 63 moves in the axial direction X together with the first plate portion 54, the main body 41 of the second engagement member 30, and the first engagement member 27 while accompanying the upper jacket 16. Meanwhile, since the second plate portion 64 of the second shock absorption portion 62 is fixed in the axial direction X by the rib 66, the second plate portion 64 thereof cannot accompany the upper jacket 16. Therefore, as the first plate portion 63 moves toward the front side due to a secondary collision, the second shock absorption portion 62 is deformed so as to be seen as if the curved portion 65 moves toward the front side. In accordance with the deformation of the second shock absorption portion 62, a shock at the time of secondary collision is absorbed. In this manner, at the time of secondary collision, the second shock absorption portion 62 can absorb a shock at the time of secondary collision by being deformed while accompanying the upper jacket 16.

Here, with reference to Fig. 15 as well, in the second modification example similar to the first modification example, the position of the fixing-releasing portion 57 in the vertical direction Z is controlled by the control unit, and the locking portion 58 can move between the advance position and the retreat position. Accordingly, when a shock at the time of secondary collision is equal to or greater than the predetermined magnitude, the locking portion 58 maintains a state of being at the advance position while the upper jacket 16 moves to the front side due to a secondary collision. Meanwhile, when a shock at the time of secondary collision is equal to or less than the predetermined magnitude, the locking portion 58 maintains a state of being at the retreat position while the upper jacket 16 moves to the front side due to a secondary collision.

Furthermore, regardless of where the locking portion 58 is positioned between the advance position and the retreat position, the top surface 63D of the first plate portion 63 of the second shock absorption portion 62 slides with respect to the bottom surface 42C of the pressing member 42. In addition, as illustrated in Fig. 15, when the locking portion 58 is at the retreat position, in addition to the sliding of the top surface 63D and the bottom surface 42C, the bottom surface 55C of the second plate portion 55 slides with respect to the top surface 64D of the second plate portion 64.

As described above and as illustrated in Fig. 14, in a state where the locking portion 58 is at the advance position, a shock at the time of secondary collision is absorbed due to the deformation of both the shock absorption portion 33 and the second shock absorption portion 62, and the friction between the top surface 63D and the bottom surface 42C. Meanwhile, as illustrated in Fig. 15, in a state where the locking portion 58 is at the retreat position, a shock at the time of secondary collision is absorbed due to the deformation of only the second shock absorption portion 62, the friction between the top surface 63D and the bottom surface 42C, and the friction between the bottom surface 55C and the top surface 64D. Accordingly, it is possible to appropriately absorb a shock by causing only the second shock absorption portion 62 to be deformed or causing both the shock absorption portion 33 and the second shock absorption portion 62 to be deformed in accordance with magnitude of a shock at the time of vehicle collision.

Description has been given regarding a configuration in which the shock absorption portion 33 and the second shock absorption portion 62 overlap each other one for each thereof, the number of each thereof can be suitably changed. In addition, each of the shock absorption portions may have a partially varied width.

Subsequently, a third modification example of the present invention will be described.

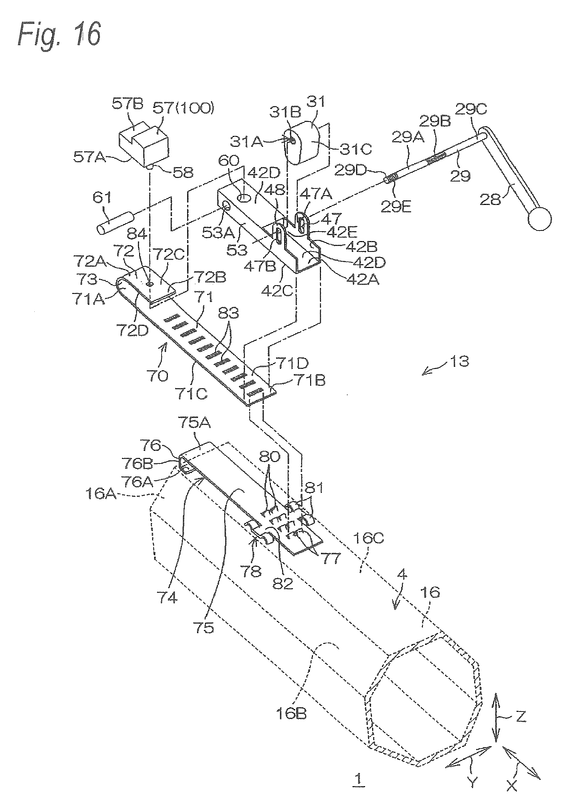

Fig. 16 is a diagram of the third modification example of the present invention applied to that in Fig. 3. The posture of each member in Fig. 16 coincides with that in Fig. 3. In Fig. 16, the same reference numerals and signs will be applied to members similar to the above-described members, and description thereof will be omitted.

With reference to Fig. 16, a second engagement member 74 in the third modification example includes a main body portion 75, an engagement portion 76, engagement projections 77, and biasing portions 78. The main body portion 75 has a flat plate shape elongated in the axial direction X. The main body portion 75 is disposed along the octagonal outer circumferential surface 16B (the uppermost flat surface 16C) of the upper jacket 16. The main body portion 75 extends to the front end portion 16A of the upper jacket 16, and the engagement portion 76 is provided at a front end portion 75A of the main body portion 75. One engagement portion 76 is provided in a continuous manner throughout the entire region in the transverse direction Y The engagement portion 76 includes a flat plate portion 76A which extends so as to be parallel to the main body portion 75 while being spaced apart therefrom at the lower side, and an erection portion 76B which is erected between the front end portion of the flat plate portion 76A and the front end portion 75A of the main body portion 75 on the front side of the front end portion 16A of the upper jacket 16. Therefore, the second engagement member 74 is hooked to the front end portion 16A of the upper jacket 16 by the engagement portion 76.

The engagement projections 77 and the biasing portions 78 are integrally provided on the rear side of the main body portion 75.

For example, each of the engagement projections 77 has a small square-piece shape and is configured to be formed by upwardly bending a portion which is punched in a channel-like manner when the main body portion 75 is viewed in the vertical direction Z. In other words, the engagement projections 77 are portions which are cut and raised upward from the main body portion 75. Since the engagement projections 77 are portions of the main body portion 75 formed of a leaf spring, the engagement projections 77 are elastically deformable. In addition, in the main body portion 75, apertures 80 are formed by cutting and raising the engagement projections 77.

A plurality of the engagement projections 77 are provided in the main body portion 75 at uniform intervals in the axial direction X and the transverse direction Y. In the third modification example, there are provided eight engagement projections 77. In detail, two columns each of which is configured to include four engagement projections 77 arranged in the axial direction X are arranged in the transverse direction Y All of the engagement projections 77 are parallel to each other. Each of the engagement projections 77 tilts toward the front upper side with respect to the axial direction X.

A pair of the biasing portions 78 are provided at a position where the engagement projections 77 are provided in the axial direction X, so as to protrude toward both the outer sides of the main body portion 75 in the transverse direction Y. The pair of biasing portions 78 have a substantial T-shape when viewed in the vertical direction Z. In detail, elastic portions 81 which are provided at intervals in the transverse direction Y from the main body portion 75, and connection portions 82 each of which connects the elastic portions 81 and the main body portion 75 are integrally included. A pair of the elastic portions 81 are provided side by side in the axial direction X in each of the biasing portions 78, and the pair of elastic portions 81 are disposed in the axial direction X so as to interpose the connection portion 82 therebetween. Each of the elastic portions 81 has an upwardly swelling shape. The pair of elastic portions 81 exhibit wave forms in their entirety when viewed in the transverse direction Y.

A first engagement member 70 in the third modification example includes a first plate portion 71, a second plate portion 72, and a curved portion 73. The first plate portion 71 has a flat plate shape elongated in the axial direction X. A plurality of engagement holes 83 (eleven in the third modification example) slender in the transverse direction Y are provided in the first plate portion 71. The engagement holes 83 penetrate the first plate portion 71 in the thickness direction and are arranged in the axial direction X at equal intervals.

The second plate portion 72 has a plate shape being disposed so as to face the first plate portion 71 on the upper side closer than the first plate portion 71. The second plate portion 72 has the same size as that of the first plate portion 71 in the transverse direction Y. A front end portion 72A of the second plate portion 72 is disposed at the same position as that of a front end portion 71A of the first plate portion 71 in the axial direction X. In addition, a rear end portion 72B of the second plate portion 72 is disposed on the front side closer than a rear end portion 71 B of the first plate portion 71. In other words, the first plate portion 71 is longer than the second plate portion 72 in the axial direction X toward the rear side. A locking hole 84 is provided in the second plate portion 72, and the locking portion 58 of the fixing-releasing portion 57 can be inserted therethrough.

The curved portion 73 has a plate shape connecting the front end portion 71A and the front end portion 72A. The curved portion 73 is curved so as to bulge forward further than the front end portion 71A and the front end portion 72A, and the curved portion 73 smoothly connects the first plate portion 71 and the second plate portion 72. The shape of such a first engagement member 70 is formed by causing the tip end of one sheet of a plate material to be curved so as to be folded back. Therefore, a bottom surface 71C of the first plate portion 71 leads to a top surface 72C of the second plate portion 72, and a top surface 71 D of the first plate portion 71 leads to a bottom surface 72D of the second plate portion 72.

The first engagement member 70 is provided on the upper side of the second engagement member 74. Four elastic portions 81 (two pairs) of the second engagement member 74 come into contact with the bottom surface 71C of the first plate portion 71 of the first engagement member 70 from below. In this state, the elastic portions 81 on both sides in the transverse direction Y stride over the engagement holes 83 and are disposed on the inner side closer than both the end edges of the first plate portion 71 in the transverse direction Y. In addition, in the transverse direction Y, the engagement projections 77 are respectively at the same position as the engagement holes 83 (in the strict sense, on the inner side of the engagement holes 83).

The pressing member 42 in the third modification example has the same shape as the pressing member 42 in the first modification example and is disposed at the same position as thereof. The bottom surface 42C of the pressing member 42 comes into contact with the top surface 71D of the first plate portion 71 of the first engagement member 70 from above. In this manner, in the third modification example, the pressing member 42 is disposed on a side opposite to the second engagement member 74 with respect to the first engagement member 70 there by being supported on the vehicle body 12 side (in the strict sense, the lower jacket 17 side).

Similar to the embodiment, in the pressing member 42, the rotary shaft 29 is inserted through the penetration holes 47, and the pressing member 42 can vertically move (in the strict sense, oscillate centering around the center shaft 61) in accordance with a rotation of the rotary shaft 29. Therefore, when the pressing member 42 moves to the lowermost side, the pressing member 42 can strongly pinch the first plate portion 71 of the first engagement member 70 between the pressing member 42 and the second engagement member 74. In addition, in this state, the engagement projections 77 engages with any of the engagement holes 83 on the first plate portion 71 from below, and the second engagement member 74 is at the above-described lock position. In this state, since the upper jacket 16 cannot move in the axial direction X, the position of the steering member 2 in the axial direction X is fixed, and the steering device 1 is in a lock state.

Meanwhile, when the pressing member 42 moves to the uppermost side in accordance with a rotation of the rotary shaft 29, the pressing member 42 releases the first engagement member 70 pinched between the pressing member 42 and the second engagement member 74. Accordingly, since the first engagement member 70 floats up from the second engagement member 74 by being biased upward by the elastic portions 81, the engagement projections 77 is disengaged from the engagement holes 83, and the second engagement member 74 is at the above-described release position. In this state, since the upper jacket 16 can move in the axial direction X, it is possible to perform a positional adjustment (a telescopic adjustment) of the steering member 2 in the axial direction X.

In this manner, the second engagement member 74 is a component individually independent from the rotary shaft 29 and the first engagement member 70, and is supported by the upper jacket 16 so as to be relatively movable (in the strict sense, the first engagement member 70 moves) between the lock position and the release position (with respect to the first engagement member 70) in accordance with a rotation of the rotary shaft 29. Similar to the above-described embodiment, since the relative movement direction of the second engagement member 74 (in the strict sense, the movement direction of the first engagement member 70) between the lock position and the release position is different from the rotating direction of the rotary shaft 29, it is possible to conduct an effect similar to that of the above-described embodiment.

Subsequently, description will be given regarding an operation of the steering device 1 at the time of vehicle collision (at the time of secondary collision) in the third modification example.

In the third modification example, when a shock at the time of secondary collision is added to the steering member 2, the upper jacket 16 moves to the front side. Since the second engagement member 74 is hooked to the front end portion 16A of the upper jacket 16 by the engagement portion 76, the second engagement member 74 moves to the front side while accompanying the upper jacket 16. Here, since the second engagement member 74 in a normal state is at the lock position, the engagement projections 77 are in a state of engaging with the engagement holes 83 of the first engagement member 70. Therefore, the first plate portion 71 provided with the engagement holes 83 in the first engagement member 70 also moves to the front side while accompanying the upper jacket 16. When the locking portion 58 is at the advance position (refer to Fig. 12), the position of the second plate portion 72 of the first engagement member 70 in the axial direction X is fixed even at the time of secondary collision. Therefore, the second engagement member 74 and the first plate portion 71 of the first engagement member 70 move toward the front side of the vehicle body 12 in accordance with a movement of the upper jacket 16 at the time of secondary collision. However, the second plate portion 72 of the first engagement member 70 cannot move in the axial direction X (maintains a state before a secondary collision).

Therefore, as the first plate portion 71 moves toward the front side due to secondary collision, the first engagement member 70 is deformed so as to be seen as if the curved portion 73 moves toward the front side. In accordance with the deformation of the first engagement member 70, a shock at the time of secondary collision is absorbed. In this manner, in order to cause the first engagement member 70 to be deformed at the time of secondary collision, the fixing-releasing portion 57 can fix the second plate portion 72 (a portion) of the first engagement member 70 in the axial direction X.

In addition, at the time of secondary collision as well, the elastic portions 81 of the second engagement member 74 bias the first engagement member 70 upward. Therefore, when the first plate portion 71 of the first engagement member 70 moves to the front side, the first plate portion 71 is pressed against the bottom surface 42C of the pressing member 42. Therefore, the first plate portion 71 slides with respect to the pressing member 42. A shock at the time of secondary collision is also absorbed due to the friction generated at the time thereof.

In this manner, at the time of secondary collision, the first engagement member 70 also serves as the shock absorption portion 33 for absorbing a shock at the time of secondary collision by being deformed while accompanying the upper jacket 16 or sliding with respect to the pressing member 42.

Meanwhile, in a state where the locking portion 58 is at the retreat position (refer to Fig. 13), the locking portion 58 is separated from the locking hole 84 of the first engagement member 70. Therefore, the second plate portion 72 of the first engagement member 70 positioned by the fixing-releasing portion 57 in the axial direction X is released. Therefore, at the time of secondary collision, the second engagement member 74 and the first engagement member 70 in their entirety move toward the front side of the vehicle body 12 in accordance with a movement of the upper jacket 16. Therefore, the first engagement member 70 is scarcely deformed. Accordingly, a shock at the time of secondary collision is absorbed due to friction which is generated when the first plate portion 71 and the second plate portion 72 of the first engagement member 70 slide with respect to the pressing member 42. In this manner, the fixing-releasing portion 57 can release the fixed second plate portion 72 of the first engagement member 70 in the axial direction X so as to cause the first engagement member 70 to slide with respect to the pressing member 42 at the time of secondary collision.

In the third modification example as well, the second shock absorption portion 62 of the second modification example (refer to Figs. 14 and 15) may be provided so as to overlap the first engagement member 70. However, it is preferable that the second shock absorption portion 62 in this case is not provided with a configuration corresponding to the engagement holes 83 so as to prevent the engagement projections 77 from being hooked.

### Industrial Applicability

According to the present invention, there is provided a steering device in which a locked position of a steering member can be prevented from being abruptly released.

### Reference Signs List

- 1: STEERING DEVICE
- 2: STEERING MEMBER
- 3: STEERING SHAFT
- 4: COLUMN JACKET
- 12: VEHICLE BODY
- 14A: REAR END PORTION
- 16: UPPER JACKET
- 17: LOWER JACKET
- 21: SECOND BRACKET
- 27: FIRST ENGAGEMENT MEMBER
- 28: OPERATION LEVER
- 29: ROTARY SHAFT
- 30: THE SECOND ENGAGEMENT MEMBER
- 31: CAM
- 33: DEFORMATION PORTION (SHOCK ABSORPTION PORTION)
- 34: ENGAGEMENT HOLE
- 41: MAIN BODY
- µ42: PRESSING MEMBER
- 43: ENGAGEMENT PROJECTION
- 44: BIASING PORTION
- 45: POSITIONING PORTION
- 55: SECOND PLATE PORTION
- 64: SECOND PLATE PORTION
- 57: FIXING-RELEASING PORTION
- 62: SECOND SHOCK ABSORPTION PORTION
- 70: FIRST ENGAGEMENT MEMBER
- 74: SECOND ENGAGEMENT MEMBER
- 77: ENGAGEMENT PROJECTION
- 83: ENGAGEMENT HOLE
- X: AXIAL DIRECTION
- Z: VERTICAL DIRECTION
- S: ROTATING DIRECTION

## Claims

1. A steering device comprising:
a steering shaft in which a steering member is attached to one end thereof and which is extendable and retractable in an axial direction thereof;
a column jacket which includes a hollow lower jacket and a hollow upper jacket positioned closer to the steering member than the lower jacket and accommodates and rotatably supports the steering shaft, the column jacket being extendable and retractable together with the steering shaft due to a relative movement of the upper jacket in the axial direction with respect to the lower jacket;
a first engagement member which is formed with a plurality of engagement holes arranged in the axial direction and is attached to the upper jacket;
a bracket which is supported by a vehicle body in a state where a position thereof in the axial direction is fixed;
a rotary shaft which extends in a direction intersecting the axial direction and to which an operation lever is connected, the rotary shaft being supported by the bracket so as to be rotatable in accordance with an operation of the operation lever; and
a second engagement member which includes an engagement projection being engageable with any of the engagement holes and being elastically deformable and is a component independent from the rotary shaft, the second engagement member being supported by the bracket so as to be movable between a lock position where the engagement projection engages with the engagement hole and a release position where the engagement projection is disengaged from the engagement hole, in accordance with a rotation of the rotary shaft,
wherein a movement direction of the second engagement member between the lock position and the release position is different from a rotating direction of the rotary shaft.

2. The steering device according to Claim 1, further comprising:
a cam which is attached to the rotary shaft, eccentrically rotates in accordance with a rotation of the rotary shaft, and moves the second engagement member between the lock position and the release position.

3. The steering device according to Claim 2,
wherein the second engagement member includes:
a main body in which the engagement projection is provided; and
a pressing member which is provided as a component independent from the main body, is elongated in the axial direction, and presses the main body against the first engagement member when being pressed by the cam while being at the lock position.

4. The steering device according to Claim 3,
wherein the main body is formed of a leaf spring, and
wherein the engagement projection is a portion which is cut and raised from the main body toward a side of the first engagement member.

5. The steering device according to Claim 3 or 4, further comprising:
a biasing portion which is provided in the main body and biases the second engagement member toward the release position.

6. The steering device according to any one of Claims 3 to 5, further comprising:
a positioning portion which is provided in the main body and positions the pressing member in the main body.

7. The steering device according to any one of Claims 3 to 6, further comprising:
a shock absorption portion which is provided in the first engagement member and is deformed while accompanying the upper jacket at the time of vehicle collision so as to absorb a shock at the time of vehicle collision.

8. The steering device according to any one of Claims 3 to 5, further comprising:
a shock absorption portion which is provided in the main body so as to be disposed between the main body and the pressing member and is deformed while accompanying the upper jacket or sliding with respect to the pressing member at the time of vehicle collision so as to absorb a shock at the time of vehicle collision.

9. The steering device according to Claim 8, further comprising:
a fixing-releasing portion which fixes a portion of the shock absorption portion in the axial direction in order to cause the shock absorption portion to be deformed at the time of vehicle collision, and releases a fixed portion of the shock absorption portion in the axial direction in order to cause the shock absorption portion to slide with respect to the pressing member at the time of vehicle collision.

10. The steering device according to Claim 8 or 9, further comprising:
a second shock absorption portion which is disposed so as to overlap the shock absorption portion, has a portion fixed in the axial direction, and is deformed while accompanying the upper jacket at the time of vehicle collision so as to absorb a shock at the time of vehicle collision.

11. A steering device comprising:
a steering shaft in which a steering member is attached to one end thereof and which is extendable and retractable in an axial direction thereof;
a column jacket which includes a hollow lower jacket and a hollow upper jacket positioned closer to the steering member than the lower jacket and accommodates and rotatably supports the steering shaft, the column jacket being extendable and retractable together with the steering shaft due to a relative movement of the upper jacket in the axial direction with respect to the lower jacket;
a bracket which is supported by a vehicle body in a state where a position thereof in the axial direction is fixed;
a rotary shaft which extends in a direction intersecting the axial direction and to which an operation lever is connected, the rotary shaft being supported by the bracket so as to be rotatable in accordance with an operation of the operation lever;
a first engagement member which is formed with a plurality of engagement holes arranged in the axial direction;
a second engagement member which includes an engagement projection being engageable with any of the engagement holes and being elastically deformable and is a component individually independent from the rotary shaft and the first engagement member, the second engagement member being supported by the upper jacket so as to be relatively movable between a lock position where the engagement projection engages with the engagement hole and a release position where the engagement projection is disengaged from the engagement hole, with respect to the first engagement member in accordance with a rotation of the rotary shaft; and
a pressing member which is disposed on a side opposite to the second engagement member with respect to the first engagement member, is supported on a side of the vehicle body, pinches the first engagement member between the pressing member and the second engagement member while being at the lock position, and releases the first engagement member pinched between the pressing member and the second engagement member while the second engagement member is at the release position,
wherein a relative movement direction of the second engagement member between the lock position and the release position is different from a rotating direction of the rotary shaft, and
wherein the first engagement member also serves as a shock absorption portion which is deformed while accompanying the upper jacket or slides with respect to the pressing member at the time of vehicle collision so as to absorb a shock at the time of vehicle collision.

12. The steering device according to Claim 11, further comprising:
a fixing-releasing portion which fixes a portion of the shock absorption portion in the axial direction in order to cause the shock absorption portion to be deformed at the time of vehicle collision, and releases the fixed portion of the shock absorption portion in the axial direction in order to cause the shock absorption portion to slide with respect to the pressing member at the time of vehicle collision.

13. The steering device according to Claim 11 or 12, further comprising:
a second shock absorption portion which is disposed so as to overlap the shock absorption portion, has a portion fixed in the axial direction, and is deformed while accompanying the upper jacket at the time of vehicle collision so as to absorb a shock at the time of vehicle collision.
